(19) Europäisches Patentamt
European Patent Office
Office européen des brevets

(11) Veröffentlichungsnummer : **0 107 614**
**B1**

(12) # EUROPÄISCHE PATENTSCHRIFT

(45) Veröffentlichungstag der Patentschrift : **21.10.87**

(51) Int. Cl.[4] : **C 09 B 62/51**, C 09 B 62/085, D 06 P 3/66

(21) Anmeldenummer : **83810427.1**

(22) Anmeldetag : **26.09.83**

(54) **Reaktivfarbstoffe, deren Herstellung und Verwendung.**

(30) Priorität : **30.09.82 CH 5754/82**

(43) Veröffentlichungstag der Anmeldung : **02.05.84 Patentblatt 84/18**

(45) Bekanntmachung des Hinweises auf die Patenterteilung : **21.10.87 Patentblatt 87/43**

(84) Benannte Vertragsstaaten : **CH DE FR GB IT LI**

(56) Entgegenhaltungen :
**FR-A- 1 192 412**
**FR-A- 2 017 023**
**US-A- 3 531 459**
**Die Akte enthält technische Angaben, die nach dem Eingang der Anmeldung eingereicht wurden und die nicht in dieser Patentschrift enthalten sind.**

(73) Patentinhaber : **CIBA-GEIGY AG**
**Klybeckstrasse 141**
**CH-4002 Basel (CH)**

(72) Erfinder : **Schwander, Hansrudolf, Dr.**
**Unterm Schellenberg 189**
**CH-4125 Riehen (CH)**
Erfinder : **Markert, Jürgen, Dr.**
**Im Guntengarten 32**
**CH-4107 Ettingen (CH)**
Erfinder : **Aeschlimann, Peter**
**Sandweg 16**
**CH-4123 Allschwil (CH)**

**EP 0 107 614 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Reaktivfarbstoffe werden seit langem in grossem Umfang für das Färben und Bedrucken von Textilien aus Fasermaterialien eingesetzt, und es steht heute eine grosse Anzahl von brauchbaren Reaktivfarbstoffen mit unterschiedlichen Eigenschaften und für verschiedene Anwendungsbereiche zur Verfügung. Angesichts der immer höheren Anforderungen an Reaktivfärbungen in bezug auf Wirtschaftlichkeit, Applikationstechnik und Echtheitsniveau ist der erreichte technische Stand aber vielfach nicht voll befriedigend.

So ist z. B. häufig festzustellen, dass der Fixiergrad zu gering, und die Differenz zwischen Ausziehgrad und Fixiergrad zu gross ist (hoher Seifverlust), so dass ein erheblicher Teil des Reaktivfarbstoffes für den Färbevorgang verloren geht. Ferner lässt das Aufbauvermögen in vielen Fällen zu wünschen übrig.

Der vorliegenden Erfindung lag die Aufgabe zugrunde, neue verbesserte Reaktivfarbstoffe zu finden, die eine hohe Reaktivität und ein gutes Aufbauvermögen besitzen, die mit hoher Fixierausbeute gefärbt werden können, die vor allem für das Ausziehfärbeverfahren geeignet sind, und die auf cellulosehaltigem Fasermaterial nass- und lichtechte Färbungen ergeben.

Es hat sich gezeigt, dass die weiter unten definierten neuen Reaktivfarbstoffe diesen Anforderungen genügen.

Gegenstand der Erfindung sind Reaktivfarbstoffe der Formel

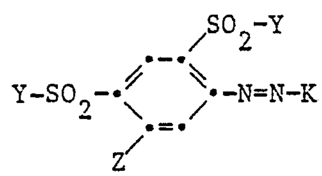

(1).

worin Y ein Rest —$CH{=}CH_2$ oder —$CH_2CH_2$—X, X eine Abgangsgruppe, Z Wasserstoff oder Halogen, und K der Rest einer bei einem pH-Wert $\leqslant 7$ kuppelnden Kupplungskomponente ist.

Die Abgangsgruppe X ist ein unter alkalischen Bedingungen abspaltbarer anorganischer oder organischer Rest.

Als ein unter alkalischen Bedingungen abspaltbarer anorganischer oder organischer Rest kommt eine der folgenden anionisch abspaltbaren Gruppen in Betracht :

$-OSO_3H$, $-SSO_3H$, $-OCOCH_3$, $-OPO_3H_2$, 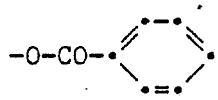

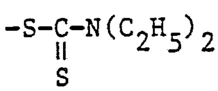, 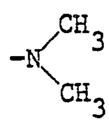, 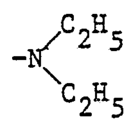,

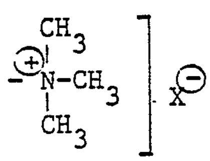 (X = Halogen),

-Cl, -Br, -F,

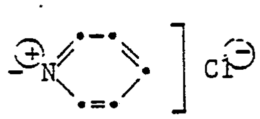, 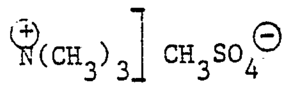.

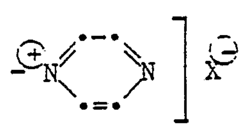 (X = Halogen),

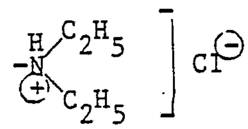 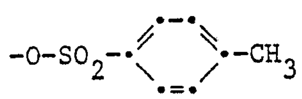,

$-O-SO_2-N(CH_3)_2$, 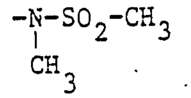 ,

$-O-SO_2-CH_3$, $-S-C{\equiv}N$,

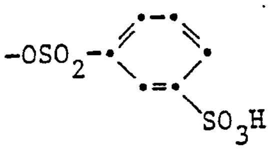 , 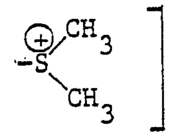 $CH_3SO_4^{\ominus}$ ,

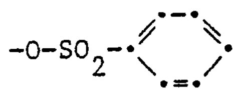 ,

$-OOCCCl_3$ , $-OOCCHCl_2$ , $-OOCCH_2Cl$ ,

$-O-O_2SR$ (R = Alkyl oder Aryl), $-O-SO_2-N(C_2H_5)_2$,

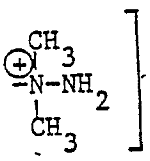 $Cl^{\ominus}$, 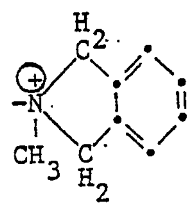 $Cl^{\ominus}$

Vorzugsweise ist X der Rest $—OSO_3H$.

Die beiden Reste Y in Formel (1) können gleich oder verschieden sein. Vorzugsweise sind beide Reste Y gleich.

Der Substituent Z ist als Halogen vorzugsweise Fluor, Chlor oder Brom.

Der Rest K ist der Rest einer Kupplungskomponente, die bei einem pH-Wert $\leq 7$, d. h. in neutralem bis saurem Medium, kuppelt. Kupplungskomponenten, die hierfür in Frage kommen sind : Aromatische Amine, enolisierbare Verbindungen und Enamine, wie z. B. Aminobenzole, Aminonaphthaline, Diphenylamine, Pyrazolone, Aminopyrazole, Indole, Pyridine, Pyridone, Pyrimidine, Chinoline und Acetessigsäurearylide.

Die Kupplungskomponenten, z. B. die der Aminobenzolreihe, müssen mindestens eine Sulfogruppe oder einen aliphatischen sulfatierbaren Substituenten, wie z. B. eine Gruppe $—C_2H_4—OH$, enthalten.

Die Kupplungskomponenten der oben genannten Klassen können in den aromatischen oder heterocyclischen Ringen weitersubstituiert sein.

Als Beispiele für weitere Substituenten am Rest K seien genannt : Alkylgruppen mit 1 bis 4 Kohlenstoffatomen, wie Methyl, Aethyl, Propyl, Isopropyl und Butyl, Alkoxygruppen mit 1 bis 4 Kohlenstoffatomen, wie Methoxy, Aethoxy, Propoxy, Isopropoxy und Butoxy, Acylaminogruppen mit 1 bis 6 Kohlenstoffatomen, wie Acetylamino und Propionylamino, Benzoylamino, Amino, Alkylamino mit 1 bis 4 Kohlenstoffatomen, Phenylamino, Alkoxycarbonyl mit 1 bis 4 Kohlenstoffatomen im Alkoxyrest, Nitro, Cyano, Trifluormethyl, Halogen, wie Fluor, Chlor und Brom, Sulfamoyl, Carbamoyl, Ureido, Hydroxy, Carboxy, Sulfomethyl und Sulfo.

Kupplungskomponenten mit dem Rest K sind vor allem Aminobenzole, welche eine Aminogruppe von der Form —NRR' enthalten, worin R und R' unabhängig voneinander Wasserstoff, Alkyl-, Cycloalkyl-, Aryl-, oder Aralkylreste oder dergleichen sind.

Als Aminogruppen NRR' kommen somit in Betracht : $—NH_2$, Alkylamino-, N,N-Dialkylamino-, Cycloalkylamino-, N,N-Dicycloalkylamino-, Aralkylamino-, Arylaminogruppen, gemischt substituierte Aminogruppen, wie N-Alkyl-N-cyclohexylamino- und N-Alkyl-N-arylaminogruppen, ferner Aminogruppen, die heterocyclische Reste enthalten, welche weitere ankondensierte carbocyclische Ringe aufweisen können, sowie Aminogruppen, worin das Aminostickstoffatom Glied eines N-heterocyclischen Ringes ist, der gegebenenfalls weitere Heteroatome enthält.

Die oben genannten Alkylreste können geradkettig oder verzweigt, niedrigmolekular oder höhermolekular sein, bevorzugt sind Alkylreste mit 1 bis 6 Kohlenstoffatomen ; als Cycloalkyl-, Aralkyl- und Arylreste kommen insbesondere Cyclohexyl-, Benzyl-, Phenäthyl-, Phenyl- und Naphthylreste in Frage ; heterocyclische Reste sind vor allem Furan-, Thiophen-, Pyrazol-, Pyridin-, Pyrimidin-, Chinolin-, Benzimidazol-, Benzthiazol- und Benzoxazolreste ; und als Aminogruppen, worin das Aminostickstoffatom Glied eines

N-heterocyclischen Ringes ist, kommen vorzugsweise Reste von sechsgliedrigen N-heterocyclischen Verbindungen in Betracht, die als weitere Heteroatome Stickstoff, Sauerstoff oder Schwefel enthalten können.

Die oben genannten Alkyl-, Cycloalkyl-, Aralkyl- und Arylreste, die heterocyclischen Reste sowie die N-heterocyclischen Ringe können weitersubstituiert sein, z. B. durch Halogen, wie Fluor, Chlor und Brom, Cyan, Trifluormethyl, Sulfamoyl, Carbamoyl, $C_{1-4}$-Alkyl, $C_{1-4}$-Alkoxy, Acetylamino, Ureido, Hydroxy, Carboxy, Sulfomethyl oder Sulfo.

Als Beispiele für den Aminorest —NRR' seien genannt : —$NH_2$, Methylamino, Aethylamino, Propylamino, Isopropylamino, Butylamino, Hexylamino, β-Methoxyäthylamino, γ-Methoxypropylamino, β-Aethoxyäthylamino, N,N-Dimethylamino, N,N-Diäthylamino, N-Methyl-N-phenylamino, N-Aethylphenylamino, β-Chloräthylamino, β-Cyanäthylamino, γ-Cyanpropylamino, β-Carboxyäthylamino, Sulfomethylamino, β-Sulfoäthylamino, β-Hydroxyäthylamino, β-Hydroxyäthylamino, N,N-Di-β-hydroxyäthylamino, γ-Hydroxypropylamino, Benzylamino, Cyclohexylamino, Morpholino, Piperidino, Piperazino, und aromatische Aminogruppen, wie Phenylamino, Toluidino, Xylidino, Chloranilino, Anisidino, Phenetidino, 2-, 3- und 4-Sulfoanilino, 2,5-Disulfoanilino, Sulfomethylanilino, N-Sulfomethylanilino, 3- und 4-Carboxyphenylamino, 2-Carboxy-5-sulfophenylamino, 2-Carboxy-4-sulfophenylamino, 4-Sulfonaphthyl-(1)-amino, 3,6-Disulfonaphthyl-(1)-amino, 3,6,8-Trisulfonaphthyl-(1)-amino und 4,6,8-Trisulfonaphthyl-(1)-amino.

Beispiele für erfindungsgemäss verwendbare Kupplungskomponenten sind weiter unten gegeben.

Bevorzugte Untergruppen der Reaktivfarbstoffe der Formel (1) sind :

a) Reaktivfarbstoffe der Formel (1), worin Y ein Rest —$CH_2CH_2$—X, und X Sulfato ist.

b) Reaktivfarbstoffe der Formel (1) oder gemäss a), worin Z Wasserstoff oder Chlor ist.

c) Reaktivfarbstoffe der Formel (1) oder gemäss a) oder b), worin K der Rest einer Kupplungskomponente der Aminobenzolreihe oder der heterocyclischen Reihe ist.

d) Reaktivfarbstoffe gemäss c), worin K der Rest eines Mono- oder Dialkylaminobenzols ist, worin die Alkylgruppe(n) und der Benzolkern weitersubstituiert sein können.

e) Reaktivfarbstoffe gemäss d), worin K der Rest eines N-Mono-$C_{1-4}$-alkenyl-, oder N,N-Di-$C_{1-4}$-alkenylaminobenzols oder eines N-Mono-$C_{1-4}$-alkyl- oder N,N-Di-$C_{1-4}$-alkylaminobenzols ist, worin die Alkylgruppe(n) durch Hydroxy, Sulfo, Sulfato, Cyano, Chlor, Phenyl, Sulfophenyl, Sulfatoäthylaminocarbonyl, N-$C_{1-4}$-Alkyl-N-sulfatoäthylaminocarbonyl oder N,N-Di-sulfatoäthylaminocarbonyl substituiert sein können, und worin der Benzolkern durch $C_{1-4}$-Alkanoylamino, $C_{1-4}$-Alkylsulfonylamino, Halogen-$C_{1-4}$-alkylsulfonylamino, Trifluormethyl, Halogen, Cyano, $C_{1-4}$-Alkylsulfonyl, N,N-Di-$C_{1-4}$-alkylaminosulfonyl, Phenylaminosulfonyl, Sulfatoäthylaminosulfonyl, N-$C_{1-4}$-Alkyl-N-sulfatoäthylamino-sulfonyl, N,N-Di-sulfatoäthylamino-sulfonyl, Sulfo-$C_{1-4}$-alkylaminosulfonyl, Carbamoyl, $C_{1-4}$-Alkylaminocarbonyl, N,N-Di-$C_{1-4}$-alkylaminocarbonyl, N-$C_{1-4}$-Alkyl-N-sulfatoäthylaminocarbonyl oder N,N-Di-sulfatoäthylaminocarbonyl substituiert sein kann.

f) Reaktivfarbstoffe gemäss e), der Formel

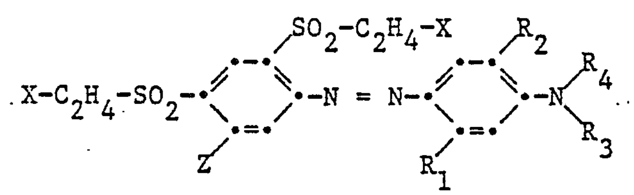

(2)

worin X Sulfato, Z Wasserstoff oder Chlor, $R_1$ Wasserstoff, Chlor, Acetylamino, Methylsulfonylamino, Chlormethylsulfonylamino, Trifluormethyl, Cyano, Methylsulfonyl, Aethylsulfonyl, n-Butylsulfonyl, N,N-Diäthylaminosulfonyl, N,N-Di-n-Butylaminosulfonyl, N,N-Di-sulfatoäthyl-aminocarbonyl, N-Methyl-N-sulfatoäthyl-aminocarbonyl, N-Methyl-N-sulfatoäthyl-aminosulfonyl, Sulfoäthylaminosulfonyl oder Phenylaminosulfonyl, $R_2$ Wasserstoff, Methoxy oder Chlor, $R_3$ Wasserstoff, β-Hydroxyäthyl, β-Sulfatoäthyl, β-Cyanäthyl, Aethyl, Benzyl, Sulfobenzyl oder Propenyl, und $R_4$ β-Hydroxyäthyl, β-Sulfatoäthyl, Aethyl, β-(β-Sulfatoäthylaminocarbonyl)-äthyl, β-(N-Methyl-N-β-sulfatoäthyl-aminocarbonyl)-äthyl, β-(N,N-Di-β-Sulfatoäthylaminocarbonyl)-äthyl, β-Sulfatopropyl, β,γ-Disulfatopropyl, Sulfoäthyl, Sulfopropyl, Sulfobenzyl, Sulfophenäthyl oder Propenyl ist.

g) Reaktivfarbstoffe gemäss c), worin K der Rest eines Aminobenzols ist, worin der Benzolkern durch N,N-Di-hydroxyäthylamino-chlortriazinylamino oder N,N-Di-sulfatoäthylamino-chlortriazinylamino und gegebenenfalls durch Sulfo substituiert ist, und worin die Aminogruppe mono- oder di-N,N-$C_{1-4}$-alkylsubstituiert sein kann.

h) Reaktivfarbstoffe gemäss g), der Formel

(Siehe Formel Seite 5 f.)

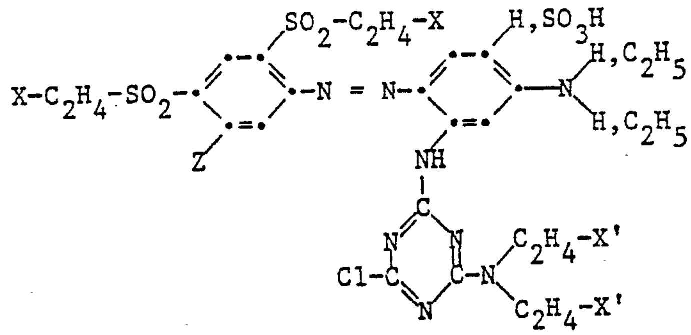 (3)

worin X Sulfato, Z Wasserstoff oder Chlor und X' Sulfato ist.

Besonders bevorzugt sind :

i) Reaktivfarbstoffe gemäss f), der Formel

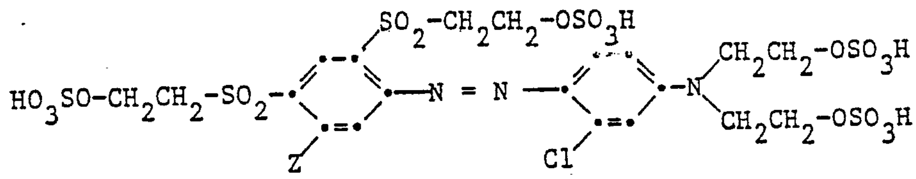 (4)

worin Z Wasserstoff oder Chlor ist.

j) Reaktivfarbstoffe gemäss f), der Formel

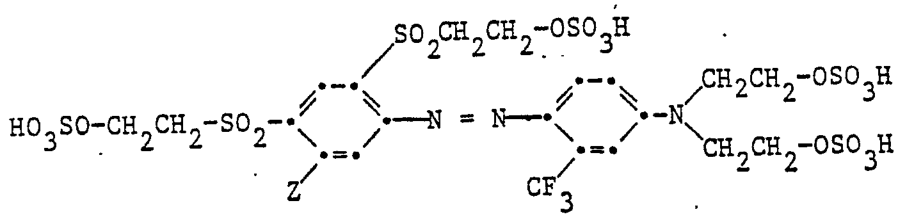 (5)

worin Z Wasserstoff oder Chlor ist.

Die Farbstoffe der Formel (1) sind faserreaktiv.

Unter faserreaktiven Verbindungen sind solche zu verstehen, die mit den Hydroxygruppen der Cellulose oder mit den Aminogruppen von natürlichen oder synthetischen Polyamiden unter Bildung kovalenter chemischer Bindungen zu reagieren vermögen.

Das Verfahren zur Herstellung der Reaktivfarbstoffe der Formel (1) ist dadurch gekennzeichnet, dass man eine Diazokomponente der Formel

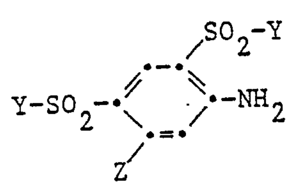 (6)

worin Y ein Rest $-CH=CH_2$ oder $-CH_2CH_2-X$, X eine Abgangsgruppe oder eine Vorstufe derselben ist, und Z die unter Formel (1) angegebene Bedeutung hat, diazotiert und auf eine Kupplungskomponente der Formel

$$H-K \quad (7)$$

bei einem pH-Wert $\leq 7$ kuppelt, und gegebenenfalls die gewünschte Abgangsgruppe einführt und/oder eine weitere Umwandlungsreaktion anschliesst.

Bei dem im vorangehenden beschriebenen Verfahren können die einzelnen Verfahrensschritte in unterschiedlicher Reihenfolge, gegebenenfalls teilweise auch gleichzeitig, ausgeführt werden. Dabei sind verschiedene Verfahrensvarianten möglich. Im allgemeinen führt man die Umsetzung schrittweise nacheinander aus.

Dabei hängt es von der Struktur der Ausgangsstoffe ab, welche der möglichen Verfahrensvarianten die besten Resultate ergeben, oder unter welchen speziellen Bedingungen, z. B. bei welcher Temperatur, die Reaktion am vorteilhaftesten auszuführen ist.

Die Diazotierung der Diazokomponenten der Formel (6) erfolgt in der Regel durch Einwirkung salpetriger Säure in wässrig-mineralsaurer Lösung bei tiefer Temperatur, die Kupplung auf die Kupplungskomponente der Formel (7) bei neutralen bis sauren pH-Werten.

Vorzugsweise verwendet man Diazokomponenten der Formel (6), worin Y ein Rest $—CH_2CH_2—X$ und X eine Sulfatogruppe ist. Die Einführung der Sulfatogruppe als Rest X geschieht durch Sulfatierung der entsprechenden Hydroxyverbindung, sie erfolgt vorzugsweise durch Umsetzung mit konzentrierter Schwefelsäure bei 0 °C bis mässig erhöhter Temperatur.

Vorzugsweise erfolgt die Sulfatierung durch Eintragen der betreffenden Verbindung in Schwefelsäuremonohydrat bei Temperaturen zwischen 5 bis 15 °C.

Die Sulfatierung kann vor oder nach der Kupplung ausgeführt werden. Falls der Rest K noch weitere aliphatische gebundene Hydroxygruppen enthält, können diese bei nachträglicher Sulfatierung ebenfalls in Sulfatogruppen übergeführt werden.

Die Einführung eines anderen unter alkalischen Bedingungen abspaltbaren anorganischen oder organischen Restes für X in eine Verbindung der Formel (1) anstelle einer Hydroxy- oder Sulfatogruppe, beispielsweise einer Thiosulfato-, Methylmercapto-, Methylsulfonyl- oder Phosphatogruppe, erfolgt in an sich bekannter Weise.

In der so erhaltenen Monoazoverbindung der Formel (1) kann die Gruppe X gegebenenfalls durch Umacylierung oder dergleichen variiert werden, indem man die Monoazoverbindung der Formel (1) hydrolysiert und anschliessend mit einer Verbindung, mit der man eine andere Gruppe X einführt, umsetzt.

Reaktivfarbstoffe der Formel (1) bzw. Diazokomponenten der Formel (6), worin Y die Vinylgruppe $—CH=CH_2$ ist, werden durch Abspaltung von Schwefelsäure aus den entsprechenden Verbindungen, worin Y ein Rest $—CH_2CH_2—X$ und X die Sulfatogruppe ist, erhalten. Eine solche Abspaltung erfolgt im allgemeinen auch unter den für Vinylsulfonfarbstoffen anwendbaren Färbebedingungen.

Gegebenenfalls kann eine freie Aminogruppe im Rest K nach der Kupplung mit einem Acylierungs- oder Alkylierungsmittel in eine Acylamino- oder Alkylaminogruppe umgewandelt werden.

Als ein derartiges Acylierungsmittel kommt vor allem ein Halogentriazin in Betracht, an das bereits eine oder zwei Alkoxy-, Amino-, Alkylamino-, Dialkylamino-, Arylaminogruppen oder dergleichen ankondensiert sein können. Die Kondensation einer Kupplungskomponente der Formel (7), die noch eine freie Aminogruppe enthält, mit einem Halogentriazin kann auch vor der Kupplung mit einer Diazokomponente der Formel (6) erfolgen. Der Ersatz eines oder zweier Halogenatome am Triazinring durch Kondensation mit einem Alkohol, Amin etc. kann ebenfalls vor oder nach der Kupplung geschehen. Die Kondensation des Halogentriazins mit der Kupplungskomponente der Formel (7) bzw. mit einem Alkohol, Amin etc. erfolgt vorzugsweise in wässriger Lösung oder Suspension, bei niedriger Temperatur und bei schwach saurem, neutralem bis schwach alkalischem pH-Wert, oder gegebenenfalls, besonders wenn nur noch 1 oder 2 austauschbare Halogenatome am Triazinring übrig sind, bei erhöhter Temperatur, z. B. zwischen 50 und 100 °C. Der bei der Kondensation freiwerdende Halogenwasserstof wird vorteilhafterweise durch laufende Zugabe von wässrigen Alkalihydroxiden, -carbonaten oder -bicarbonaten neutralisiert.

Falls eine Kupplungskomponente der Formel (7) einen über eine Aminogruppe gebundenen Triazinrest enthält, an der eine Alkoxy- oder Aminogruppe oder dergleichen ankondensiert ist, welche aliphatische gebundene Hydroxygruppen enthält, können die letzteren bei einer nachträglichen Sulfatierung ebenfalls in Sulfatogruppen übergeführt werden.

Die Diazokomponenten der Formel (6), worin Y und Z die unter Formel (1) angegebenen Bedeutungen haben, sind neu und stellen einen weiteren Gegenstand der Erfindung dar.

Bevorzugt sind Verbindungen der Formel (6), worin Y ein Rest $—CH_2CH_2—X$, X Hydroxy oder Sulfato, und Z Wasserstoff oder Chlor ist.

Die Verbindungen der Formel (6) können erhalten werden, indem man Di- oder Trihalogennitrobenzole mit Mercaptoäthanol umsetzt, die erhaltenen Verbindungen zu den entsprechenden Sulfonylverbindungen oxydiert, die Nitrogruppe zur Aminogruppe reduziert und gegebenenfalls eine Abgangsgruppe einführt.

Eine besondere Variante für die Reduktion der Nitrogruppe zur Aminogruppe besteht darin, diese unter katalytischen Bedingungen, z. B. mit Wasserstoff unter Druck und Palladium als Katalysator, durchzuführen. In diesem Falle werden gleichzeitig neben der Reduktion der Nitrogruppe gegebenenfalls noch vorhandene Halogenatome mittels reduktiver Enthalogenierung abgespalten.

Eine weitere Verfahrensweise zur Herstellung der Verbindungen der Formel (6) ist dadurch gekennzeichnet, dass man ein Halogen-dinitrobenzol mit Mercaptoäthanol umsetzt, das entstandene Halogen-β-hydroxyäthylmercapto-nitrobenzol erneut mit Mercaptoäthanol umsetzt, das erhaltene Bis-(β-hydroxyäthylmercapto)-nitrobenzol zu der entsprechenden Bis-sulfonyl-verbindung oxydiert, die Nitrogruppe zur Aminogruppe reduziert und gegebenenfalls eine Abgangsgruppe einführt.

Die als Vorprodukte verwendeten Di- oder Trihalogennitrobenzole bzw. Halogendinitrobenzole können im Benzolkern, wie unter Formel (1) angegeben, weitersubstituiert sein. In einigen Fällen ist es auch möglich, die Vorprodukte durch eine Nitrierung von substituierten Di- oder Trihalogenverbindungen herzustellen.

Als Verbindungen der Formel (6), die als Diazokomponenten in Frage kommen, seien im folgenden beispielsweise genannt :

1-Amino-2,4-di-(β-hydroxyäthylsulfonyl)-benzol,
1-Amino-2,4-di-(β-hydroxyäthylsulfonyl)-5-chlor-benzol,
sowie die entsprechenden Di-β-sulfato- oder Di-β-phosphato-Verbindungen,
1-Amino-2,4-di-(vinylsulfonyl)-benzol,
1-Amino-2,4-di-(vinylsulfonyl)-5-chlor-benzol,
1-Amino-2,4-di-(β-acetoxyäthylsulfonyl)-benzol,
1-Amino-2,4-di-(β-acetoxyäthylsulfonyl)-5-chlor-benzol.

Die Kupplungskomponenten der Formel (7) sind bekannt und werden nach bekannten Methoden hergestellt. Aus der grossen Zahl möglicher Kupplungskomponenten seien folgende als Beispiele genannt :

N-Aethyl-N-(β-hydroxyäthyl)-anilin, N-Aethyl-N-(β-acetoxyäthyl)-anilin, 3-Acetylamino-N,N-di-(β-hydroxyäthyl)-anilin, 3-Methyl-N,N-di-(β-acetoxyäthyl)-anilin, 2-Methoxy-5-acetylamino-N-(β-acetoxyäthyl)-N-benzylanilin, 2-Chlor-5-acetylamino-N-(γ-phenoxy-β-hydroxy-n-propyl)-anilin, 3-Ureidoanilin, N-Aethyl-N-(3'-sulfobenzyl)-anilin, 3-Methyl-N-äthyl-N-(β-sulfoäthyl)-anilin, 3-Methyl-N,N-di-(β-hydroxyäthyl)-anilin, 3-Methyl-6-methoxy-N,N-di-(β-hydroxyäthyl)-anilin, 3-Acetylaminoanilin, 3-Methyl-N-äthyl-N-(β-hydroxyäthyl)-anilin, 1-(3'-Chlorphenyl)-3-methylpyrazolon-5, 1-(2'-Chlor-6'-methylphenyl)-3-methylpyrazolon-5, 1-Phenyl-3-methylpyrazolon-5, 1-(2',3'- oder 4'-sulfophenyl)-3-methylpyrazolon-5, 1-(2'-Chlor-4'- oder 5'-Sulfophenyl)-3-methylpyrazolon-5, 1-(2'-Methyl-4'-sulfophenyl)-3-methylpyrazolon-5, 1-[4',8'-Disulfonaphthyl-(2)]-3-methylpyrazolon-5, 1-[5',7'-Disulfonaphthyl(2)]-3-methylpyrazolon-5, 1-(2'-Chlor-5'-sulfophenyl)-3-methyl-5-aminopyrazol, 1-(2'-Chlor-4'-sulfophenyl)-3-methyl-5-aminopyrazol, 1-(3'- oder 4'-Sulfophenyl)-3-methyl-5-aminopyrazol, Acetessigsäureanilid.

Eine bevorzugte Ausführungsform des Verfahrens zur Herstellung von Reaktivfarbstoffen der Formel (1) besteht darin, dass man eine Diazokomponente der Formel

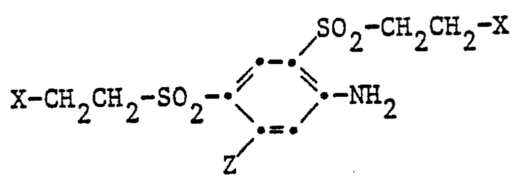

(8)

worin X Hydroxy oder Sulfato, und Z Wasserstoff oder Chlor ist, diazotiert und auf eine Kupplungskomponente der Formel

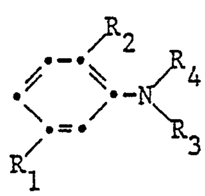

(9)

worin $R_1$, $R_2$, $R_3$ und $R_4$ die unter Formel (2) angegebenen bedeutungen haben, kuppelt, und den erhaltenen Monoazofarbstoff gegebenenfalls sulfatiert.

Eine weitere bevorzugte Verfahrensweise ist dadurch gekennzeichnet, dass man eine Kupplungskomponente der Formel

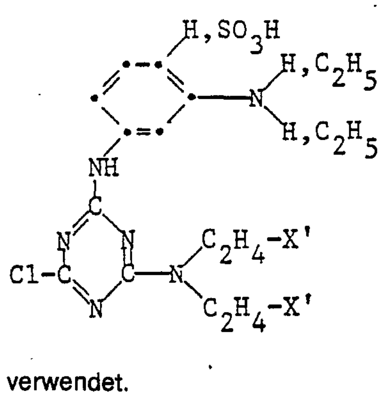

(10)

worin X' Hydroxy oder Sulfato ist, verwendet.

Eine vorteilhafte Methode besteht darin, zunächst einen Farbstoff herzustellen, der eine Vorstufe des Reaktivrestes enthält, und diese nachträglich in die Endstufe umzuwandeln, z. B. durch Veresterung oder eine Additionsreaktion.

Beispielsweise kann man einen Farbstoff der Formel (1) herstellen, worin Y ein Rest $—CH_2CH_2—OH$ ist, und das Zwischenprodukt mit Schwefelsäure umsetzen, so dass die Hydroxygruppe in die Sulfatogruppe überführt wird ; oder man kann einen Farbstoff der Formel (1) herstellen, worin Y ein Rest —CH=CH ist, und an das Zwischenprodukt Thioschwefelsäure anlagern, wobei ein Rest $—CH_2CH_2—SSO_3H$ entsteht.

Der oben beschriebene Weg der Herstellung über eine Zwischenstufe des Reaktivrestes geht in vielen Fällen einheitlich und vollständig.

Die bevorzugten Reaktivfarbstoffe der Formeln (4) und (5) können glatt und mit guter Ausbeute hergestellt werden, indem man eine Diazokomponente der Formel

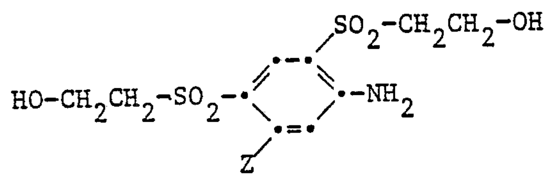

(11)

worin Z Wasserstoff oder Chlor ist, diazotiert und auf eine Kupplungskomponente der Formel

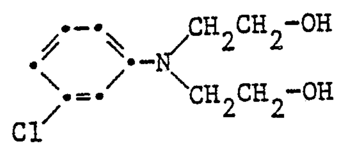

(12)

bzw. der Formel

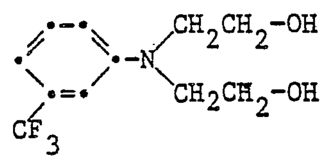

(13)

kuppelt, und die erhaltene Monoazoverbindung durch Umsetzung mit Chlorsulfonsäure in N-Methylpyrrolidon in den Tetra-Sulfatoester überführt.

Der direkte Weg, die Kupplung der bereits sulfatierten Diazokomponente mit der ebenfalls sulfatierten Kupplungskomponente, ist auch gangbar.

Die Reaktivfarbstoffe der Formel (1) eignen sich zum Färben und Bedrucken der verschiedenartigsten Materialien, wie Seide, Leder, Wolle, Superpolyamidfasern und Superpolyamidurethanen, insbesondere aber cellulosehaltiger Materialien faseriger Struktur, wie Leinen, Zellstoff, regenerierter Cellulose und vor allem Baumwolle. Sie eignen sich sowohl für das Ausziehverfahren als auch für das Foulardfärbeverfahren, wonach die Ware mit wässrigen und gegebenenfalls auch salzhaltigen Farbstofflösungen imprägniert wird, und die Farbstoffe nach einer Alkalibehandlung oder in Gegenwart von Alkali, gegebenenfalls unter Wärmeeinwirkung, fixiert werden. Die Reaktivfarbstoffe der Formel (1) eignen sich auch zum Druck, insbesondere auf Baumwolle, ebenso aber auch zum Bedrucken von stickstoffhaltigen Fasern, z. B. von Wolle, Seide oder Wolle enthaltenden Mischgeweben.

Die Reaktivfarbstoffe der Formel (1) eignen sich besonders zum Färben von Baumwolle nach dem Ausziehfärbeverfahren und dem Kaltverweilverfahren, wobei die Differenz zwischen Ausziehgrad und Fixiergrad bemerkenswert klein, d. h. der Seifverlust sehr gering ist.

Die Reaktivfarbstoffe der Formel (1) zeichnen sich durch hohe Reaktivität und gutes Fixiervermögen aus. Sie können daher nach dem Ausziehfärbeverfahren bei niedrigen Färbetemperaturen eingesetzt werden und erfordern beim Pad-steam-Verfahren nur kurze Dämpfzeiten. Die Reaktivfarbstoffe der Formel (1) zeichnen sich ferner durch gute Löslichkeit aus. Sie ergeben Färbungen mit guten Nass- und Lichtechtheiten und hoher Färbstärke und bemerkenswert hoher Faser-Farbstoff-Bindungsstabilität, sowohl in saurem als auch in alkalischem Bereich ; die Färbungen sind ätzbar.

Es empfiehlt sich, die Färbungen und Drucke einem gründlichen Spülen mit kaltem und heissem Wasser, gegebenenfalls unter Zusatz eines dispergierend wirkenden und die Diffusion der nicht fixierten Anteile fördernden Mittels, zu unterwerfen.

Aus der US-PS 3 531 459 ist ein Monoazofarbstoff bekannt, welcher zwei β-Sulfatoäthylsulfonylgruppen enthält. Gegenüber diesem zeichnet sich der nächstvergleichbare erfindungsgemässe Farbstoff durch eine überraschend verbesserte Lichtechtheit aus.

Die Herstellung der Zwischenverbindungen ist in den nachfolgenden Ausführungsbeispielen nicht in allen Fällen beschrieben, sie ergibt sich jedoch ohne weiteres aus dem oben Gesagten.

In den nachfolgenden Beispielen bedeuten die Teile Gewichtsteile, und die Temperaturen sind in Celsiusgraden angegeben.

Beispiel 1

Zu einem Gemisch, bestehend aus 22,5 g 2,4,5-Trichlornitrobenzol, 15,6 g Mercaptoaethanol und 90 ml Dimethylformamid gibt man bei einer Temperatur von 5-10° portionenweise insgesamt 11,2 g Kaliumhydroxyd. Zeitbedarf ca. 2 1/2 Stunden, Kühlung mit Eisbad. Anschliessend rührt man noch während 2 Stunden bei derselben Temperatur. Man trennt durch eine Klärfiltration von aufgefallenem Kaliumchlorid ab und entfernt aus dem Filtrat das Dimethylformamid in einem Rotationsverdampfer im Wasserstrahlvakuum. Das zurückbleibende gelbe Oel versetzt man mit 250 ml heissem Wasser, gibt dazu Natronlauge mit einem pH-Wert von ca. 11 und verrührt das Gemisch, wobei Kristallisation erfolgt. Man isoliert das Produkt durch Filtration, wäscht es mit Wasser neutral und trocknet es im Vakuum bei 70°, wobei man ein gelbes feinkristallines Pulver erhält.

Zur Reinigung kristallisiert man aus 4 Teilen n-Butanol um. Man erhält so das Produkt der Formel

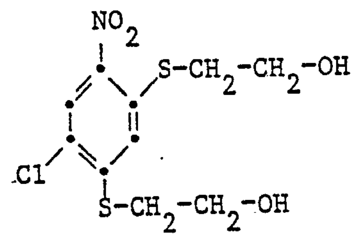

vom Schmelzpunkt Fp. 153-154°.

Aus der Mutterlauge der Kristallisation lässt sich das Nebenprodukt der Formel

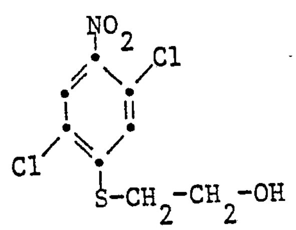

vom Schmelzpunkt Fp 106° isolieren.

Beispiel 2

Ein Gemisch bestehend aus 2 g Wolframsäure mit 800 ml Wasser wird mit Natronlauge auf pH 11,6 gestellt, verrührt bis eine Lösung erhalten wird und hierauf durch Zugabe von Essigsäure ein pH-Wert von 6,0 eingestellt. in die Lösung trägt man 309 g des Rohproduktes mit der Hauptkomponente der Formel

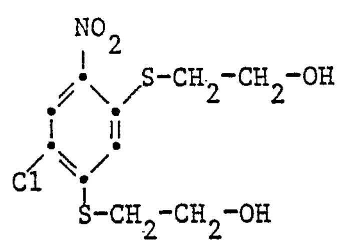

ein und heizt auf 80°, worauf man bei einer Temperatur von 80-85° 194 g 35 %-ige Wasserstoff-peroxid-Lösung zulaufen lässt. Nach Verbrauch des Peroxids erhöht man die Temperatur auf 93° und lässt bei 93°-95° weitere 214 g 35 %-iges Wasserstoffperoxyd zulaufen. Anschliessend rührt man noch während 30 Minuten bei Rückfluss. Beim Erkalten kristallisiert das Produkt aus. Man filtriert auf einer Nutsche und wäscht mit Wasser, worauf man das Produkt im Vakuum bei 70° trocknet.

Zur Reinigung kristallisiert man das so erhaltene Rohprodukt aus 4 Teilen n-Butanol um. Man erhält das Produkt der Formel

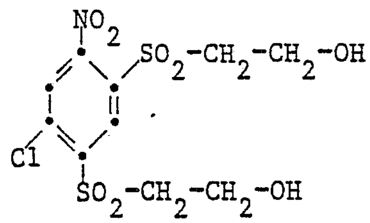

vom Schmelzpunkt Fp 156-157° als farbloses feinkristallines Pulver.

Beispiel 3

Ein Gemisch, bestehend aus 100 ml Wasser, 1 ml konzentrierter Salzsäure, 0,5 ml Essigsäure 80 %-ig und 20 g Eisenpulver wird während 30 Minuten bei einer Temperatur von 95-98° verrührt. Man verdünnt hierauf mit 100 ml Wasser und trägt bei einer Temperatur von 90-95° innerhalb ca. 45 Minuten 37,3 g der Verbindung der Formel

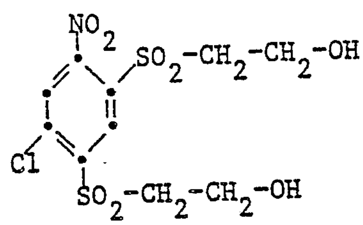

ein. Anschliessend rührt man noch während 2 Stunden bei einer Temperatur von 90-95°. Man lässt auf 80° erkalten, stellt mit Soda schwach alkalisch, erhitzt hierbei auf 93° und filtriert auf einer vorgeheizten Nutsche, wobei man mit wenig heissem Wasser nachwäscht. Beim Erkalten kristallisiert aus dem Filtrat das Produkt aus, welches man bei Raumtemperatur abfiltriert und bei 70° im Vakuum trocknet.

Man erhält das Produkt der Formel

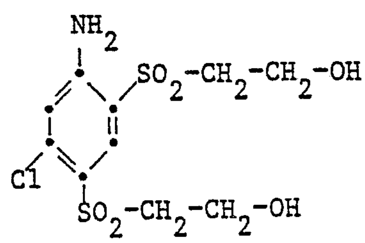

vom Schmelzpunkt Fp 176° als farbloses feinkristallines Pulver:

Beispiel 4

Man verrührt 343 g der Verbindung der Formel

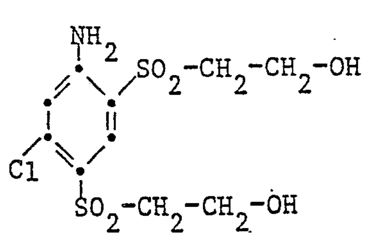

mit 1 200 ml N-Methylpyrrolidon und lässt hierauf bei einer Temperatur von 40-45° 350 g Chlorsulfonsäure dazu laufen. Man rührt das Gemisch noch während 2 Stunden bei 45°, worauf man auf 2 400 ml Eiswasser giesst. Man stellt den pH-Wert des Gemisches mit Natriumbicarbonat auf 5,5 und extrahiert anschliessend das Methylpyrrolidon mit Methylenchlorid. Man dampft die wässrige Phase im Vakuum bei einer Temperatur von 30-40° zur Trockne ein und erhält so die Verbindung der Formel.

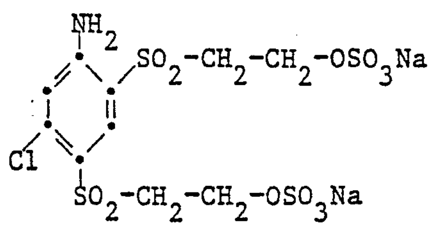

welche noch Natriumsulfat enthält.

Beispiel 5

Zu einem Gemisch aus 13,8 g der Verbindung der Formel

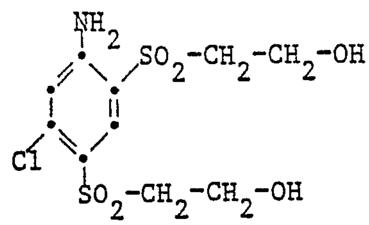

20 ml Essigsäure, 30 ml Wasser und 12 ml konzentrierter Salzsäure gibt man bei einer Temperatur von 0-2° 10 ml 4n-Natriumnitritlösung und rührt bei derselben Temperatur bis zur vollständigen Diazotierung. Ein geringer Nitrit-Ueberschuss wird mit Sulfaminsäure zerstört. Man gibt nun die Diazosuspension zu einer bei 0-5° hergestellten Lösung von 8,8 g N-(Bis-oxäthyl)-3-chlor-anilin in 50 ml Wasser und 11 ml konzentrierter Salzsäure und hält das Kupplungsgemisch während 1 Stunde bei 0-2° im pH-Bereich 1-2. Man stellt den pH-Wert mit Natronlauge auf 4,0 und filtriert das ausgefällte Produkt auf einer Nutsche ab und wäscht es mit Wasser, worauf man dasselbe im Vakuum bei 70-80° trocknet. Das so hergestellte Produkt der Formel

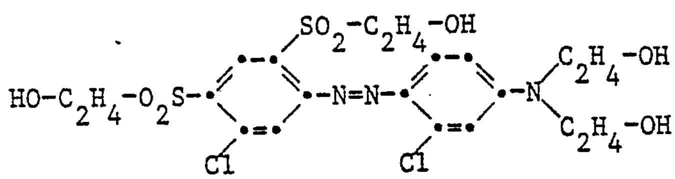

wird als dunkelrotes Pulver erhalten, welches sich in organischen Lösungsmitteln mit blauroter Farbe löst.

Zur Ueberführung in den Sulfato-ester verrührt man 17 g dieser Verbindung mit 80 ml N-Methylpyrrolidon, gibt bei einer Temperatur von 40-42°, 27,8 g Chlorsulfonsäure hinzu und rührt diese Mischung während 4 Stunden bei 40-42°, worauf man sie auf 280 ml Eiswasser giesst. Durch Zugabe von Natriumbicarbonat stellt man den pH-Wert der erhaltenen Lösung auf 5,5 und extrahiert anschliessend das Methylpyrrolidon mit Methylenchlorid. Die wässrige Phase wird hierauf in einem Rotationsverdampfer im Wasserstrahl-Vakuum bei 30-40° zur Trockne eingedampft und der verbleibende Rückstand mit 250 ml 10 %iger Kaliumchloridlösung verarbeitet. Man saugt auf einer Nutsche ab und trocknet den so erhaltenen Farbstoff der Formel

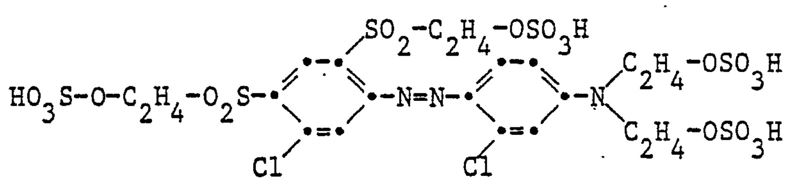

im Vakuum bei Raumtemperatur. Der Farbstoff, welcher als Kaliumsalz vorliegt und noch Kaliumchlorid enthält, löst sich im Wasser mit blauroter Farbe.

Nach den für Vinyl-sulfon-Farbstoffe üblichen Färbeverfahren als Reaktivfarbstoff auf Baumwolle appliziert, erhält man blaustichigrote Färbungen mit guten Echtheitseigenschaften, insbesondere mit guter Lichtechtheit und guter saurer Bindungsstabilität. Der Farbstoff baut sehr gut auf mit hohem Ausziehgrad, die Färbungen sind weiss ätzbar.

Verwendet man bei der Kupplung anstelle von N-(Bis-oxäthyl)-3-chloranilin bei analogem Vorgehen

äquivalente Mengen anderer Hydroxyalkylgruppen aufweisender Kupplungskomponenten und unterwirft die so erhaltenen Produkte anschliessend in der oben beschriebenen Weise der Sulfatierung, so erhält man die in Tabelle I aufgeführten Farbstoffe, welche sich alle nach den für Vinylsulfon-Farbstoffe üblichen Applikationsverfahren auf Baumwolle färben lassen und welche ähnliche gute Eigenschaften wie beim oben aufgeführten Farbstoff aufweisen.

Tabelle I

R = 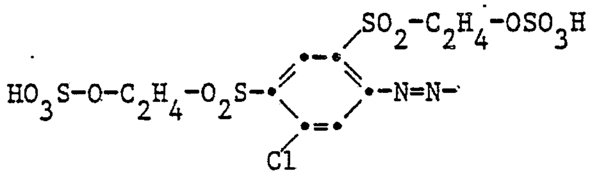

| Nr. | | Nuance auf Baumwolle |
|---|---|---|
| 1 | 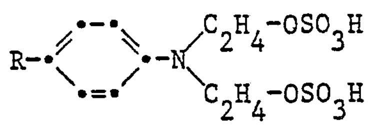 | blaustichig-rot |
| 2 | 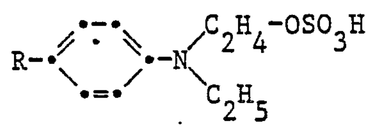 | blaustichig-rot |
| 3 | 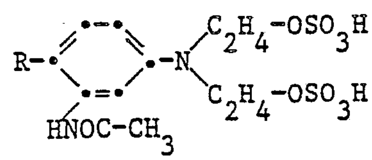 | rot-violett |
| 4 | 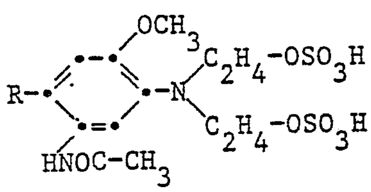 | blau-violett |
| 5 | 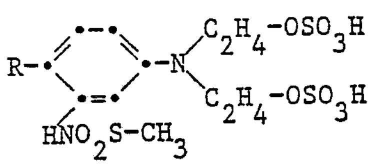 | rot-violett |
| 6 | 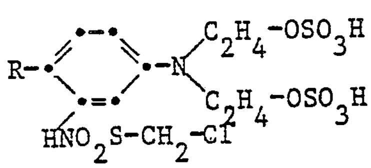 | rot-violett |
| 7 | 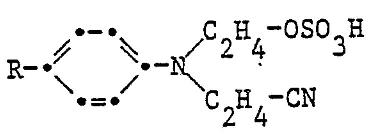 | rot |

Tabelle I (Fortsetzung)

| Nr. | | Nuance auf Baumwolle |
|---|---|---|
| 8 | 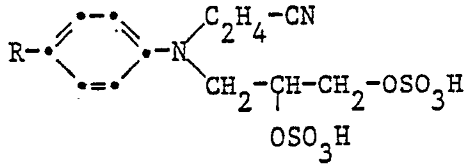 | rot |
| 9 | 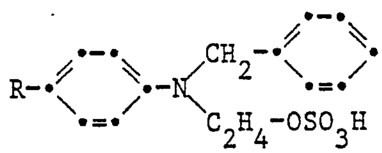 | blaustichig-rot |
| 10 | 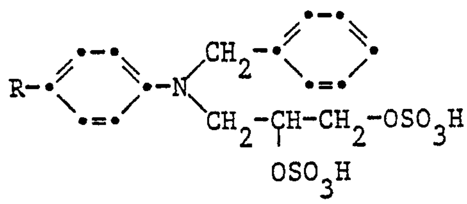 | blaustichig-rot |
| 11 | 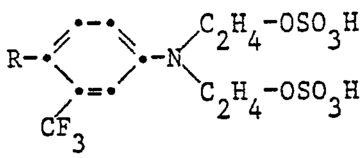 | rot |
| 12 | 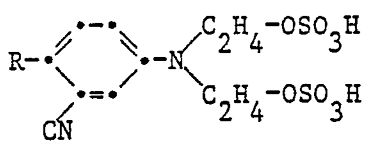 | rot |
| 13 | 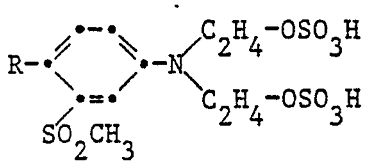 | blaustichig rot |
| 14 | 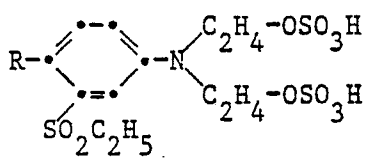 | blaustichig rot |
| 15 | 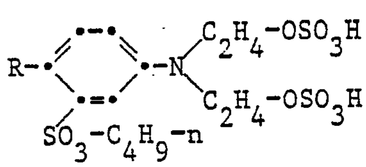 | blaustichig rot |

Tabelle I (Fortsetzung)

| Nr. | | Nuance auf Baumwolle |
|---|---|---|
| 16 | 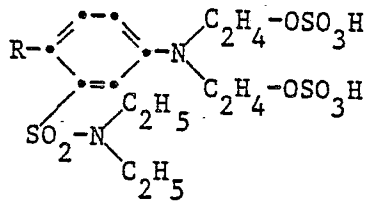 | blaustichig rot |
| 17 | 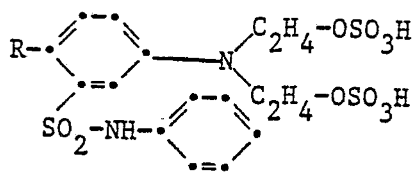 | blaustichig rot |
| 18 | 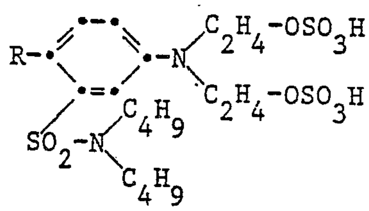 | blaustichig rot |
| 19 | 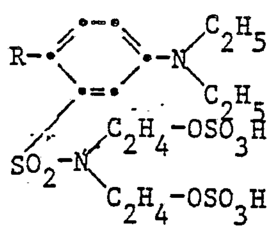 | blaustichig rot |
| 20 | 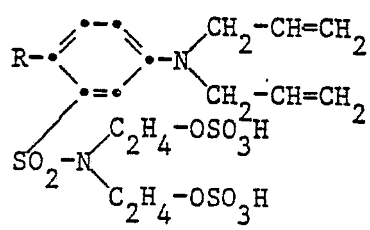 | rot |
| 21 | 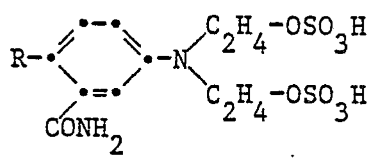 | rot |
| 22 | 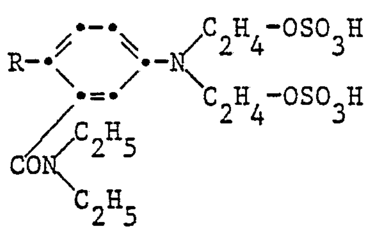 | rot |

Tabelle I (Fortsetzung)

| Nr. | | Nuance auf Baumwolle |
|---|---|---|
| 23 | 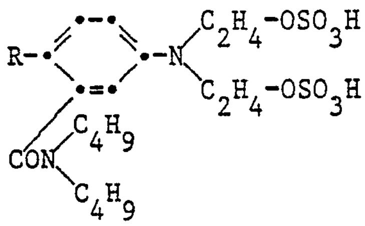 | rot |
| 24 | 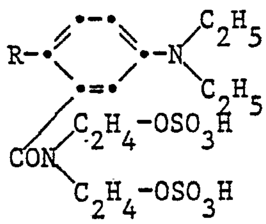 | rot |
| 25 | 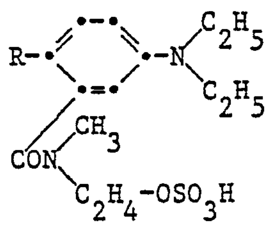 | rot |
| 26 | 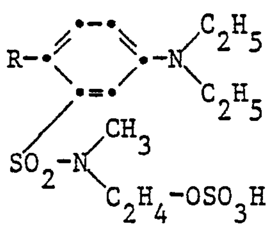 | rot |
| 27 | 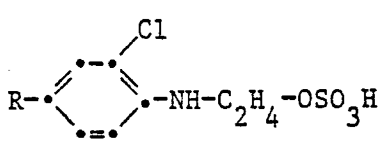 | gelbstichig-rot |
| 28 | 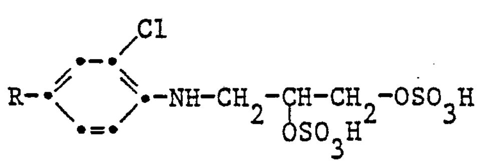 | gelbstichig-rot |
| 29 | 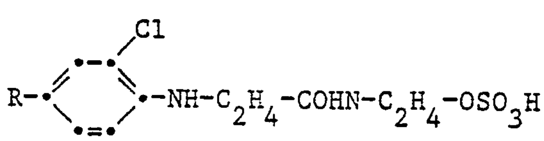 | gelbstichig-rot |

Tabelle I (Fortsetzung)

| Nr. | | Nuance auf Baumwolle |
|---|---|---|
| 30 | 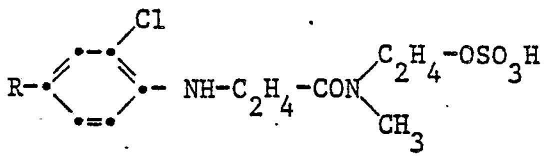 | gelbstichig-rot |
| 31 | 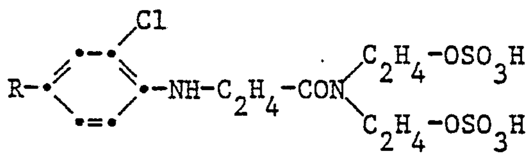 | gelbstichig-rot |
| 32 | 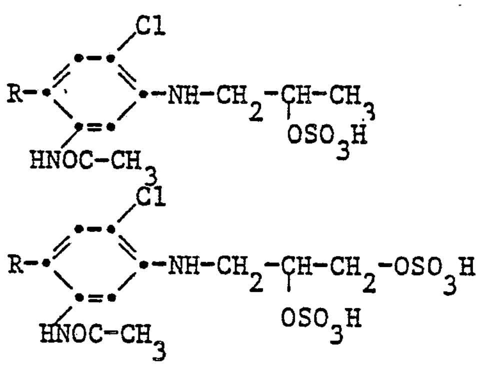 | rot |
| 33 | | rot |
| 34 | 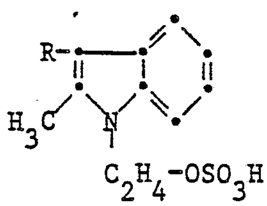 | rotstichig-gelb |
| 35 | 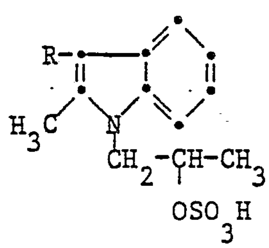 | rotstichig-gelb |
| 36 | 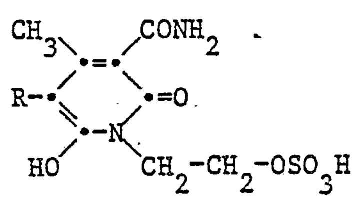 | gelb |
| 37 | 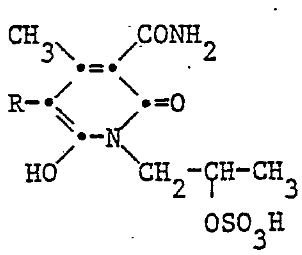 | gelb |

Die den Tabellenbeispielen entsprechenden Kupplungskomponenten der Formeln

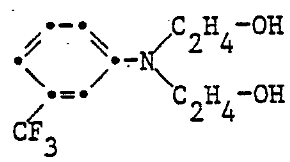

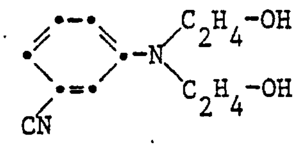

können durch Umsetzung von m-Trifluormethyl- bzw. m-Cyan-anilin mit Aethylenoxyd in Eisessig bei 40° dargestellt werden.

Analog werden die in m-Stellung Sulfon, Sulfonamid- bzw. Carbonsamid-Gruppen aufweisenden Komponenten aus den entsprechenden m-substituierten Anilinen durch Alkylierung mit Aethylenoxid bzw. mit Dimethylsulfat erhalten.

Verwendet man in diesen Beispielen anstelle der eingangs erwähnten Diazokomponente äquivalente Mengen der Verbindung der Formel

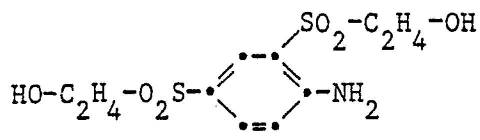

so erhält man bei sonst gleichem Vorgehen Farbstoffe welche ähnliche Eigenschaften aufweisen.

Beispiel 6

Man löst bei Raumtemperatur 4/100 Mol der Verbindung der Formel

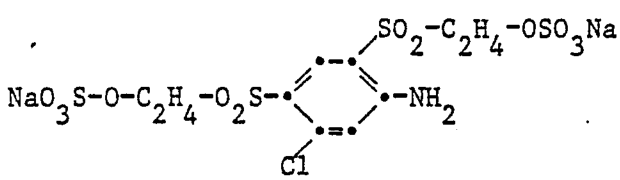

bei pH 6 in 50 ml Wasser, gibt 10 ml 4n-Natriumnitritlösung dazu und lässt diese Mischung unter raschem Rühren zu einem Gemisch bestehend aus 45 g Eis und 15 ml konzentrierter Salzsäure zulaufen. Nach einstündigem Rühren bei 0-2° zerstört man den Nitritüberschuss mit Sulfaminsäure und lässt die Diazolösung zu einer bei 0° hergestellten Lösung von 4/100 Mol N-Aethyl-N-benzyl-anilin-3'-sulfosäure in 60 ml Wasser zulaufen. Man lässt innerhalb von ca. 30 Minuten durch Zugabe von 4n-Natronlauge den pH-Wert auf 3 ansteigen, worauf die Kupplung beendet ist. Nun stellt man den pH-Wert auf 5,5 und isoliert den Farbstoff durch Zugabe von Kaliumchlorid als Kaliumsalz. Nach Trocknung im Vakuum bei Raumtemperatur wird der Farbstoff der Formel

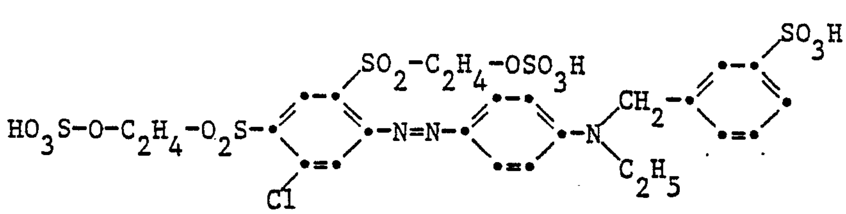

als rotes Pulver erhalten, welches sich im Wasser mit violett-roter Farbe löst.

Die mit diesem Farbstoff und Baumwolle nach den für Vinylsulfon-Farbstoffe üblichen Färbeverfahren erzeugten stark blaustichigroten Färbungen besitzen gute Echtheitseigenschaften, und der Farbstoff zeigt einen sehr guten Aufbau und Ausziehgrad.

Verwendet man, bei ansonst gleichem Vorgehen, anstelle der N-Aethyl-N-benzyl-anilin-3'-sulfosäure äquivalente Mengen der den Beispielen der Tabelle II entsprechenden Kupplungskomponenten so erhält man die Farbstoffe der Tabelle II, welche ähnlich gute Echtheitseigenschaften aufweisen.

Tabelle II

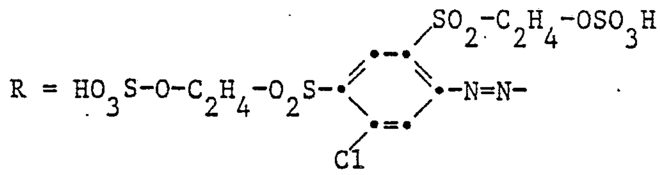

| Nr. | | Nuance auf Baumwolle |
|---|---|---|
| 1 | 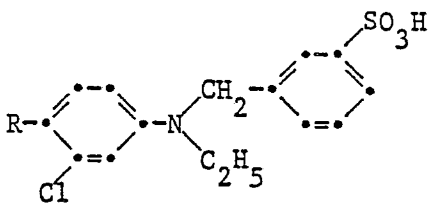 | rot |
| 2 | 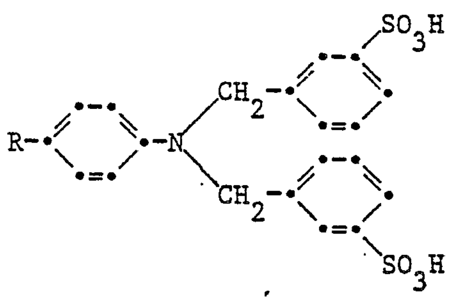 | rot |
| 3 | 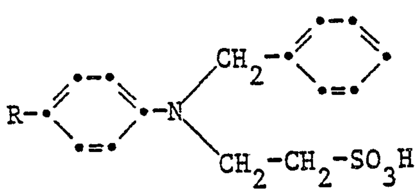 | rot |
| 4 | 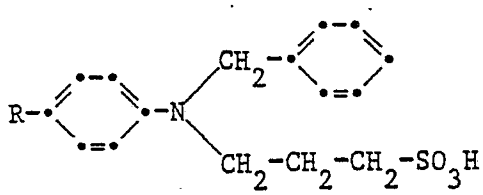 | rot |
| 5 | 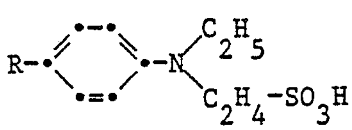 | rot |
| 6 | 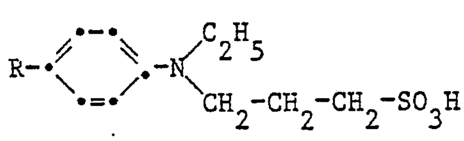 | rot |

Tabelle II (Fortsetzung)

| Nr. | | Nuance auf Baumwolle |
|---|---|---|
| 7 | 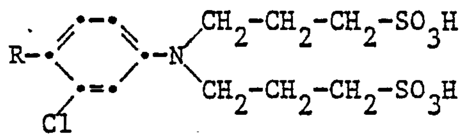 | rot |
| 8 | 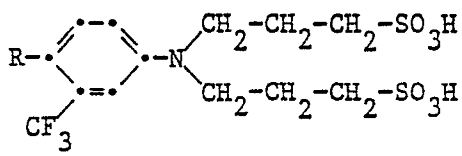 | rot |
| 9 | 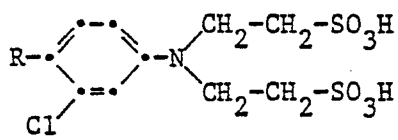 | rot |
| 10 | 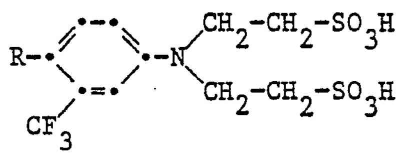 | rot |
| 11 | 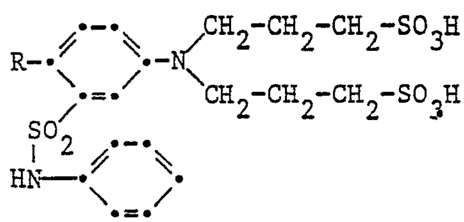 | rot |
| 12 | 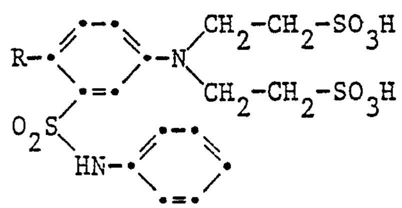 | rot |
| 13 | 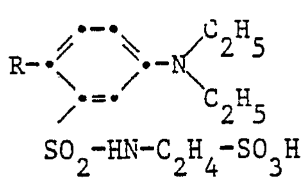 | rot |
| 14 | 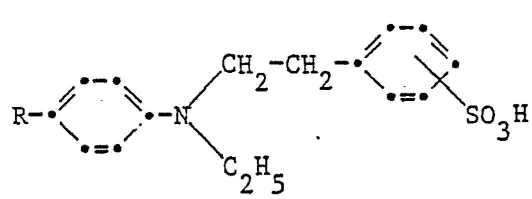 | blaustichig-rot |

Tabelle II (Fortsetzung)

| Nr. | | Nuance auf Baumwolle |
|---|---|---|
| 15 | 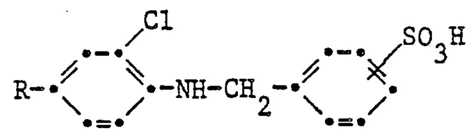 | gelbstichig-rot |
| 16 | 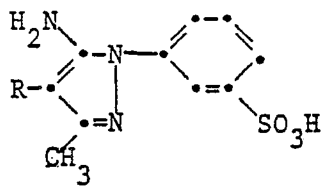 | goldgelb |
| 17 | 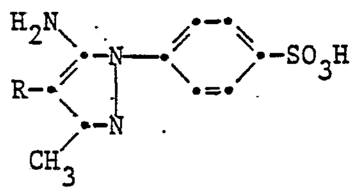 | goldgelb |
| 18 | 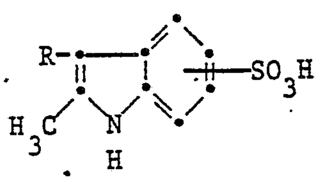 | gelb |
| 19 | 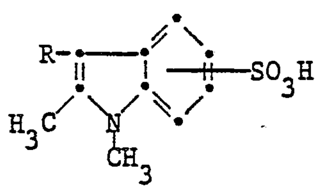 | gelb |
| 20 | 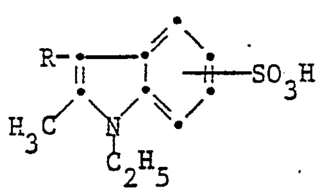 | gelb |
| 21 | 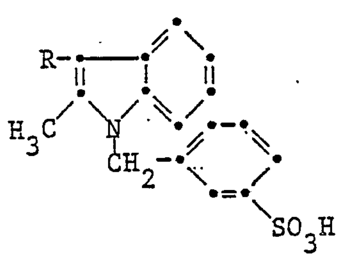 | gelb |

Tabelle II (Fortsetzung)

| Nr. | | Nuance auf Baumwolle |
| --- | --- | --- |
| 22 | 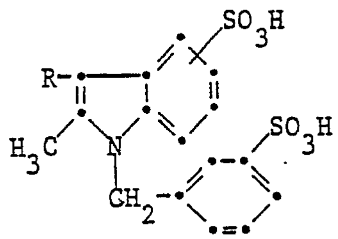 | gelb |
| 23 | 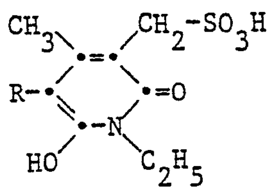 | gelb |
| 24 | 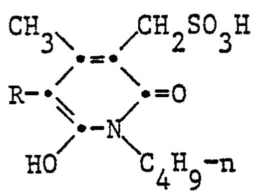 | gelb |
| 25 | 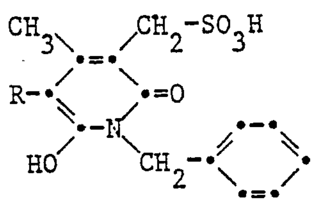 | gelb |
| 26 | 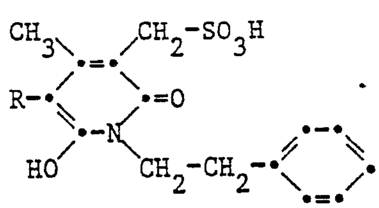 | gelb |
| 27 | 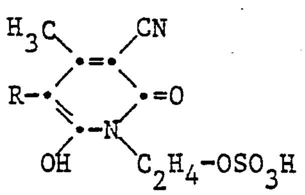 | gelb |

Verwendet man in diesen Beispielen anstelle der eingangs aufgeführten Diazokomponente äquivalente Mengen der Verbindung der Formel

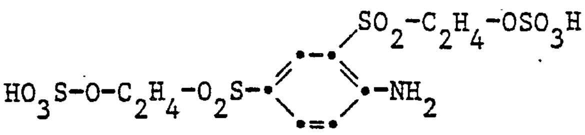

(aus Bis-2,4-(oxäthyl)-sulfon-anilin durch Sulfatierung mit Chlorsulfonsäure in N-Methyl-pyrrolidon erhalten) so erhält man bei sonst gleichem Vorgehen Farbstoffe welche ähnliche Eigenschaften aufweisen.

Beispiel 7

Zu einer Suspension von 20 g Cyanurchlorid in einem Gemisch aus 100 g Eis und 40 ml Wasser lässt man bei einer Temperatur von 0-2° eine Lösung von 16,4 g der Verbindung der Formel

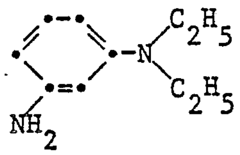

in 100 ml Methylenchlorid zulaufen. Bei intensivem Rühren hält man den pH-Wert durch Zugabe von Sodalösung im Bereich 3-4 bis zur vollständigen Umsetzung des Anilin-Derivats. Man gibt nun 11,5 g Diäthanolamin hinzu, worauf man die Temperatur bis 25° und den pH-Wert bis 7 steigen lässt. Nach vollständiger Umsetzung des Diäthanolamins extrahiert man das gebildete Produkt mit Methylenchlorid. Die Methylenchlorid-Lösung wird getrocknet, das Methylenchlorid im Rotationsverdampfer entfernt und der verbleibende Rückstand in Aethylenglykol-monoäthyläther gelöst. Man erhält eine Lösung, welche die Verbindung der Formel

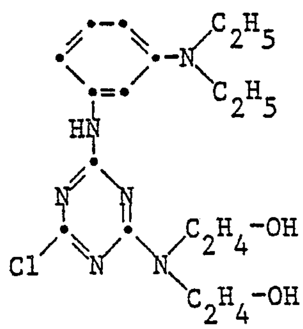

enthält.

Beispiel 8

4/100 Mol der Verbindung der Formel

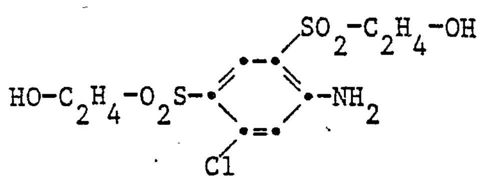

werden wie in Beispiel 5 beschrieben diazotiert. Zu der Diazosuspension lässt man bei 0-2° eine Lösung der Verbindung der Formel

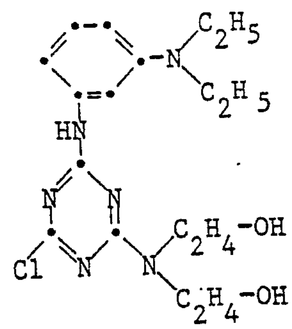

in Aethylenglykol-monoäthyläther zutropfen, wobei man den pH-Wert durch Zugabe von Soda bei 2-3 hält. Nach vollständiger Kupplung erhöht man den pH-Wert auf 4, verdünnt das Gemisch mit Wasser und isoliert das ausgefällte Produkt der Formel

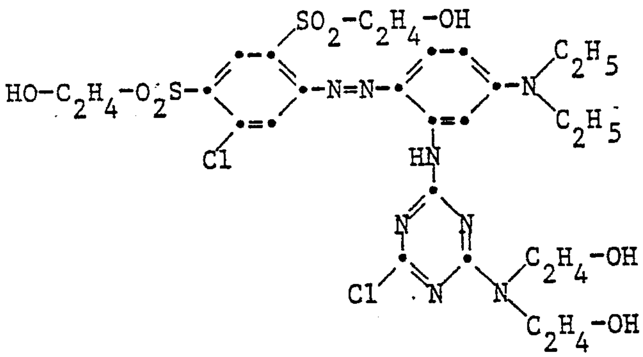

durch Filtration, worauf man es im Vakuum bei 70° trocknet. Das Produkt wird als rotes Pulver erhalten, welches sich in organischen Lösungsmitteln mit rotvioletter Farbe löst.

Beispiel 9

4/100 Mol der Verbindung der oben angeschriebenen Formel werden wie in Beispiel 5 beschrieben mit Chlorsulfonsäure in N-Methylpyrrolidon sulfatiert. Der erhaltene Farbstoff der Formel

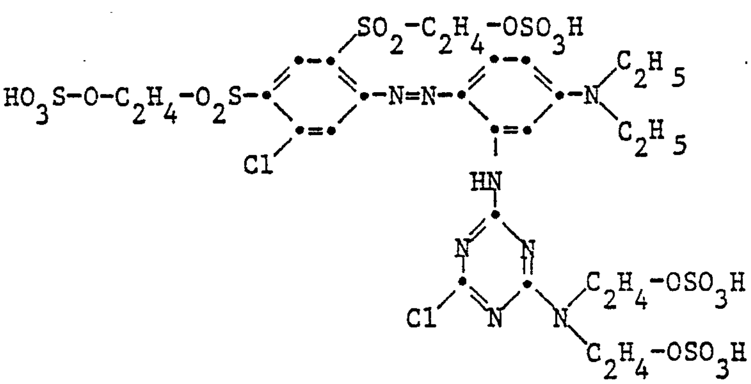

färbt auf Baumwolle, nach den für Vinylsulfon-Farbstoffe üblichen Färbeverfahren appliziert, ein brillantes Rotviolett mit guten Echtheitseigenschaften.

Verwendet man anstelle der eingangs aufgeführten Diazokomponente eine äquivalente Menge der Verbindung der Formel

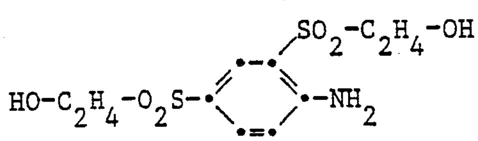

so erhält man bei sonst gleichem Vorgehen einen Farbstoff, welcher, in derselben Weise appliziert, Baumwolle ebenfalls echt rotviolett färbt.

Beispiel 10

Zu einer Suspension von 20 g Cyanurchlorid in einem Gemisch aus 100 g Eis und 40 ml Wasser lässt man bei einer Temperatur von 0-20° eine neutrale Lösung von 19,8 g 1,3-Phenylendiamin-4-sulfosäure in 120 ml Wasser zulaufen, wobei man den pH-Wert nicht über 3 steigen lässt. Man rührt noch 20 Minuten bei 0-2°, gibt 100 g Eis hinzu und stellt den pH-Wert mit Natronlauge auf 6,5. Nun gibt man 11,5 g Diäthanolamin zu, wobei man den pH-Wert bei 6-7 hält und die Temperatur bis 25° steigen lässt. Man erhält eine Lösung, welche die Verbindung der Formel

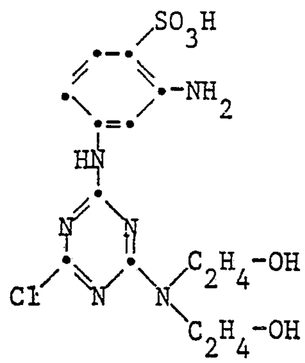

enthält.

Beispiel 11

4/100 Mol der Verbindung der Formel

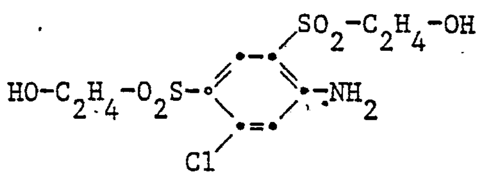

werden wie in Beispiel 5 beschrieben diazotiert. Die Diazosuspension lässt man bei einer Temperatur von 0-2° zu 4/100 Mol der Verbindung der Formel

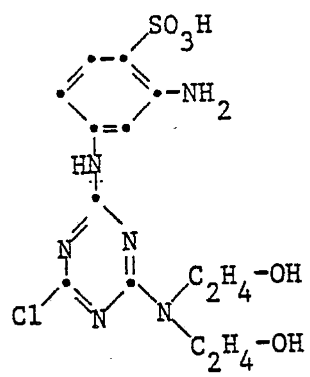

gelöst in Wasser, zulaufen, wobei man den pH-Wert durch Zugabe von Soda bei 2-3 hält. Nach vollständiger Kupplung wird das gebildete Produkt bei pH 6 durch Zugabe von Kochsalz als Natriumsalz isoliert, abfiltriert und im Vakuum bei 70° getrocknet.

Das gebildete Produkt der Formel

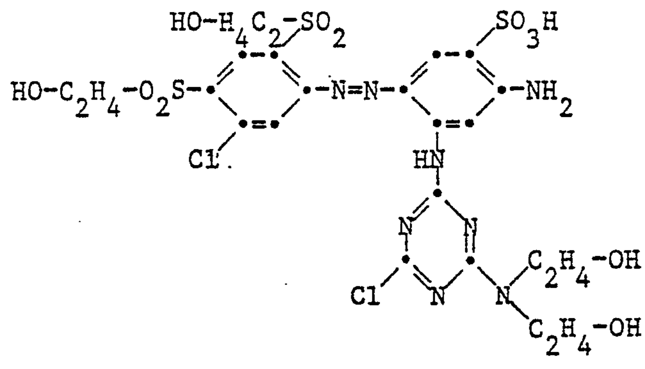

wird als braungelbes Pulver erhalten, welches sich in Wasser mit rotstichig-gelber Farbe löst.

Beispiel 12

4/100 Mol der Verbindung der oben angeschriebenen Formel werden wie in Beispiel 5 beschrieben mit Chlorsulfonsäure in N-Methylpyrrolidon sulfatiert. Der erhaltene Farbstoff der Formel

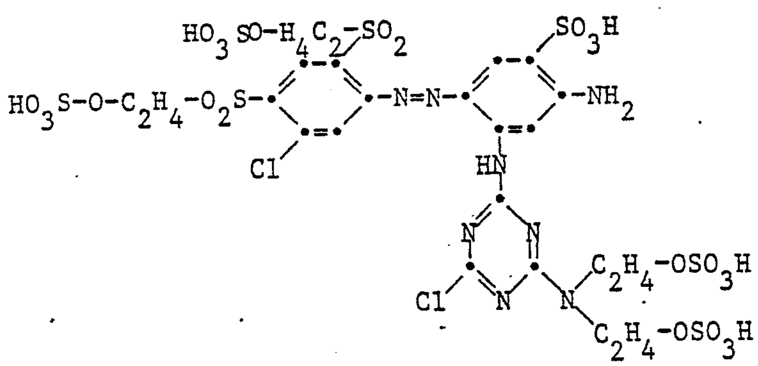

färbt Baumwolle, nach den für Vinylsulfonfarbstoffe üblichen Färbeverfahren appliziert, rotstichig-gelb mit guten Echtheitseigenschaften.

Einen Farbstoff mit ähnlichen Eigenschaften erhält man, wenn man anstelle der eingangs aufgeführten Diazokomponente bei sonst gleichenm Vorgehen eine äquivalente Menge 2,4-Bis(oxäthyl)-sulfonylanilin verwendet.

Beispiel 13

Zu einer Lösung von 4/100 Mol des Natriumsalzes der Phenyl-methyl-pyrazolon-4-sulfosäure in Wasser lässt man bei einer Temperatur von 0-2° 4/100 Mol Diazosuspension des 2,4-Bis(oxäthyl)-sulfonyl-5-chlor-anilins zutropfen, wobei man den pH-Wert des entstehenden Gemisches durch Zutropfen von Sodalösung bei 4 hält. Nach vollständiger Kupplung isoliert man den gebildeten Farbstoff bei pH 7 nach Zugabe von Kochsalz durch Filtration und trocknet denselben im Vakuum bei 70°. Der so erhaltene Farbstoff der Formel

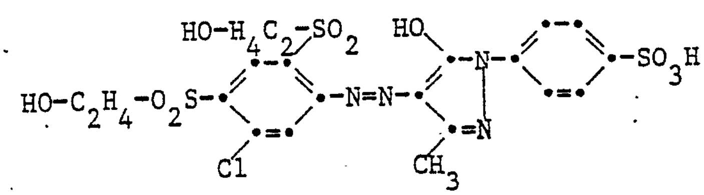

bildet ein gelbes Pulver, welches sich in Wasser mit gelber Farbe löst.

Wird dieses Produkt wie in Beispiel 5 beschrieben der Sulfatierung mit Chlorsulfonsäure in N-Methylpyrrolidon unterworfen so erhält man den Farbstoff der Formel

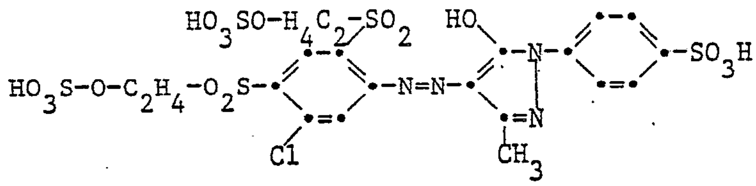

welcher Baumwolle, nach den für Vinylsulfon-Farbstoffe üblichen Färbeverfahen appliziert, rotstichig-gelb mit guten Echtheitseigenschaften färbt.

Verwendet man bei der oben beschriebenen Kupplung anstelle der Phenyl-methyl-pyrazolon-4-sulfosäure äquivalente Mengen der den folgenden Tabellenbeispielen entsprechenden Pyrazolone, so erhält man bei sonst gleichem Vorgehen die in der folgenden Tabelle III aufgeführten Farbstoffe, welche ähnliche Eigenschaften aufweisen.

Tabelle III

| Nr. | R = 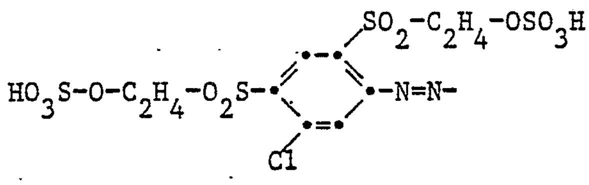 | Nuance auf Baumwolle |
|---|---|---|
| 1 | 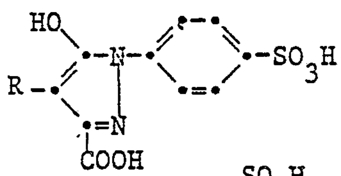 | rotstichig-gelb |
| 2 | 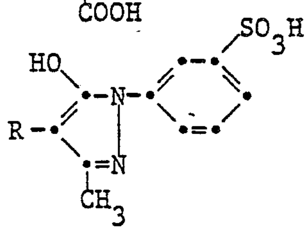 | rotstichig-gelb |
| 3 | 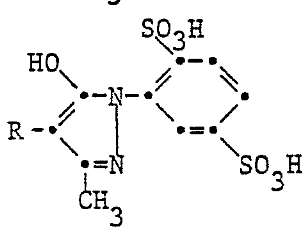 | rotstichig-gelb |
| 4 | 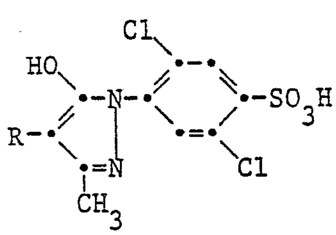 | rotstichig-gelb |
| 5 | 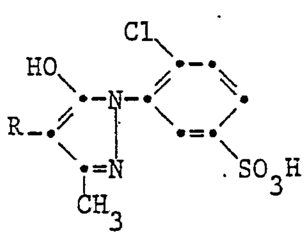 | rotstichig-gelb |

Tabelle III (Fortsetzung)

| Nr. | | Nuance auf Baumwolle |
|---|---|---|
| 6 | 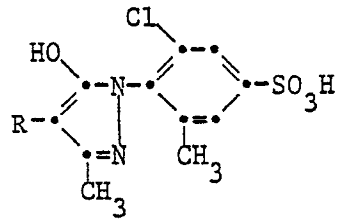 | rotstichig-gelb |

Verwendet man in diesen Beispielen als Diazokomponente äquivalente Mengen 2,4-Bis-(oxäthyl)-sulfonyl-anilin so erhält man bei sonst gleichem Vorgehen Farbstoffe mit ähnlichen guten Eigenschaften.

Beispiel 14

Zu einer Lösung von 192 g (1.0 Mol) 1-Nitro-2,4-dichlorbenzol und 171,6 g (2.2 Mol) 2-Mercaptoäthanol in 750 ml Aethanol wird bei 30-35° innert 90 Minuten die Lösung von 123.2 g Kaliumhydroxid (2.2 Mol) in 350 ml Aethanol zugetropft. Man rührt eine Stunde bei 30-35° und setzt hierauf nochmals 14 ml 2-Mercaptoäthanol sowie innert 30 Minuten eine Lösung von 12 g Kaliumhydroxid in 35 ml Aethanol nach. Die gelbe Reaktionsmischung wird weitere 3 Stunden bei 40-45° verrührt, danach auf 15-20° abgekühlt und filtriert. Man wäscht mit Wasser neutral und chloridfrei und trocknet im Vakuum bei 75-80°, wobei das 1-Nitro-2,4-bis-(β-hydroxyäthyl)-sulfid in gelbgefärbten Kristallen mit einer Ausbeute von 245 g = 89 % der Theorie erhalten wird.

Eine aus Alkohol umkristallisierte Probe schmilzt bei 120-122°. 220.0 g (0.8 Mol) des Sulfids werden in 500 ml Wasser suspendiert und unter Rühren auf 80° erwärmt. Danach setzt man 2 g frisch hergestellte Wolframsäure in 30 ml Wasser (hergestellt durch Lösen der wässrigen Suspension der Wolframsäure mit NaOH und Zurückstellen des pH-Wertes mit Essigsäure auf ca. 5-5.5) zu und tropft innert 90 Minuten 275 ml Wasserstoffperoxid 35 %-ig (3.2 Mol) zu. Man hält die exotherme Reaktion durch gelegentliche Aussenkühlung bei 80-90°. Nach Zusatz von ca. 1/3 des benötigten Wasserstoffperoxids geht das Sulfid in Lösung und gegen Ende der Zutropfdauer scheidet sich das Reaktionsprodukt aus der gelb gefärbten Lösung ab. Man hält weitere 6 Stunden bei 95-100°, setzt 5 g Aktivkohle zu und filtriert die heisse Lösung. Nach Abkühlen auf Raumtemperatur scheidet sich das 1-Nitro-2,4-bis-(β-hdyroxyäthyl)-sulfon in schwach hellgelb gefärbten Kristallen ab. Man filtriert, wäscht mit Eiswasser nach und trocknet im Vakuum bei 80°.

Ausbeute : 249 g = 92 % der Theorie.

Eine aus Alkohol umkristallisierte Probe schmilzt bei 176-178°.

13,56 g (0,04 Mol) 1-Nitro-2,4-bis-(β-hydroxyäthyl)-sulfon werden in 300 ml Wasser suspendiert und nach Zusatz von 0,8 g Pd/C 5 %-ig mit Wasserstoff bei 80° und 20 bar Druck katalytisch hydriert. Die Wasserstoff-Aufnahme ist nach ca. 90 Minuten beendet. Nach Abfiltration des Katalysators wird die bräunlich gelb gefärbte Lösung auf ein Volumen von 40 ml eingeengt und danach auf 0-5° abgekühlt, worauf das Amin der Formel

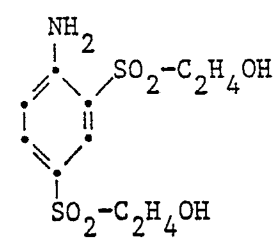

auskristallisiert. Man filtriert, wäscht mit wenig kaltem Wasser nach und trocknet im Vakuum bei 70-80°.

Die Ausbeute beträgt 10,4 g = 84 % der Theorie. Der Schmelzpunkt des Produktes liegt bei 116-118°.

Die katalytische Hydrierung lässt sich auch in organischen Lösungsmitteln, z. B. Aethanol, durchführen, wobei das Amin nach Abziehen des Lösungsmittels in vergleichbarer Qualität und Ausbeute, wie in Wasser angegeben, erhalten wird.

Beispiel 15

16,95 g (0,05 Mol) 1-Nitro-2,4-bis-(β-hydroxyäthyl)-sulfon werden in 200 ml Aethanol nach Zusatz von

0,8 g Pd/C 5 %-ig bei 35-38° mit Wasserstoff unter Normaldruck katalytisch hydriert. Nach 20 Minuten unterbricht man die Hydrierung, filtriert vom Katalysator ab und engt die alkoholische Lösung auf ein Volumen von 120 ml ein. Nach Abkühlen auf 5-10° wird das auskristallisierte Reaktionsprodukt abfiltriert, mit wenig Alkohol nachgewaschen und im Vakuum bei 80° getrocknet. Gemäss Elementaranalyse, $H^1$- und $C^{13}$-Kernresonanz-Spektrum wird das Hydroxylamin der Formel

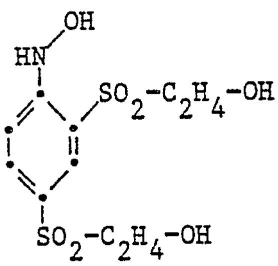

erhalten. Eine kleine Probe schmilzt nach zweimaligem Umkristallisieren aus Alkohol bei 150-152°.

56 g (0,18 Mol) der Hydroxylamin-Verbindung werden in 360 ml Wasser suspendiert. Nach Zusatz von 3,5 ml 85 %-iger techn. Phosphorsäure wird mit konz. Ammoniak ein pH-Wert von 6,8-7,0 eingestellt. Nach Zusatz von 6 g Raney-Nickel wird mit Wasserstoff bei 80° und 20 bar Druck katalytisch hydriert. Nach beendeter Wasserstoff-Aufnahme filtriert man vom Katalysator ab, kühlt die erhaltene Lösung auf 0-2° ab, worauf das Amin der Formel

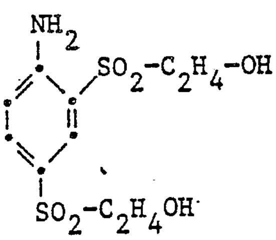

in farblosen Kristallen erhalten wird. Die Ausbeute beträgt 46 g = 83 % der Theorie. Elementaranalyse, Schmelzpunkt und spektroskopische Eigenschaften stimmen mit dem aus Beispiel 14 erhaltenen Produkt überein.

Beispiel 16

8,58 g (0.11 Mol) 2-Mercapto-äthanol werden zu einer Lösung von 4.4 g Natriumhydroxid in 15 ml Wasser gegeben. Unter kräftigem Rühren setzt man bei Raumtemperatur die Lösung von 20.25 g (0.1 Mol) 1-Chlor-3,4-dinitrobenzol und 0.46 g Benzyl-triäthylammoniumchlorid in 40 ml Chloroform zu und rührt noch 15 Minuten nach, wonach das Reaktionsprodukt grösstenteils ausgefallen ist. Man filtriert, wäscht mit wenig Wasser und Alkohol nach und trennt die im Filtrat verbleibende organische Schicht ab, aus der nach Trocknen über $MgSO_4$ und Abziehen des Lösungsmittels weiteres Reaktionsprodukt der Formel

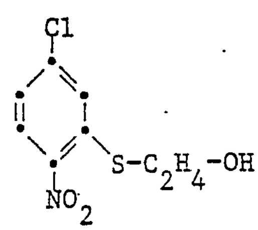

erhalten wird.

Die Gesamtausbeute an 1-Chlor-3-β-hydroxy-äthylmercapto-4-nitrobenzol beträgt 18.0 g = 77 % der Theorie.

Nach Umkristallisieren einer kleinen Probe aus Alkohol werden gelbe Kristalle vom Schmelzpunkt 106-108° erhalten.

16.34 g (0.07 Mol) 1-Chlor-3-β-hydroxyäthylmercapto-4-nitrobenzol werden in 180 ml Aethanol suspendiert und danach die warme Lösung von 10.6 g (0.1 Mol) Soda und 7.8 g (0.1 Mol) 2-Mercapto-äthanol in 150 ml Wasser zugesetzt. Man hält das Gemisch 3 Stunden unter Rückfluss, setzt nochmals 5 g 2-Mercapto-äthanol nach und hält solange unter Rückfluss, bis sich dünnschichtchromatographisch kein Ausgansmaterial mehr nachweisen lässt. Danach kühlt man auf Raumtemperatur und filtriert von anorganischen Salzen ab. Nach Einengen des Filtrates fällt ein gelbes Reaktionsprodukt aus, welches mit

Wasser versetzt, abfiltriert und im Vakuum bei 70° getrocknet wird. Man erhält 15.3 g eines Produktes vom Schmelzpunkt 120-122° (Alkohol), welches gemäss Elementaranalyse und spektroskopischen Eigenschaften mit dem durch unabhängige Synthese aus 1-Chlor-2,4-dinitrobenzol und 2-Mercaptoäthanol hergestellten Bis-Sulfid der Struktur

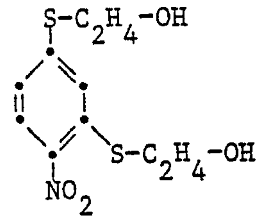

identisch ist.

Die weitere Aufoxidation zum Bis-Sulfon sowie die Reduktion zum Amin der Struktur

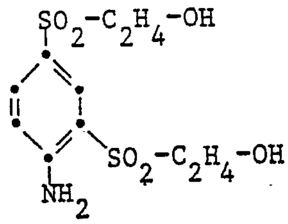

erfolgen analog wie in Beispiel 14 beschrieben.

Beispiel 17

74,7 g (0,2 Mol) von in Beispiel 1 beschriebenem 2,4-Bis-(β-hydroxyäthyl)-sulfonyl-5-chlor-nitrobenzol werden in 350 ml Wasser suspendiert. Nach Zusatz von 5 g Pd/C 5 %-ig wird mit Wasserstoff von 20 bar Druck bei 80° katalytisch hydriert. Die Wasserstoff-Aufnahme ist nach ca. 2 Stunden beendet, worauf man den Katalysator abfiltriert. Die erhaltene grünlich gefärbte, stark sauer reagierende Lösung wird mit 30 %-iger Natriumhydroxid-Lösung auf einen pH-Wert von 6,3-6,5 eingestellt, wobei das Reaktionsprodukt bereits teilweise ausfällt. Man erwärmt auf 85-90°, setzt 0,5 g Aktivkohle zu und filtriert heiss. Nach dem Abkühlen kristallisiert das Amin der Formel

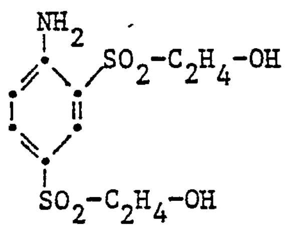

in nahezu farblosen Kristallen aus, welche abfiltriert, mit 100 ml Eiswasser nachgewaschen und im Vakuum bei 70-80° getrocknet werden. Die Ausbeute beträgt 47 g = 76 % der Theorie. Elementaranalyse, Mischschmelzpunkt und spektroskopische Eigenschaften stimmen mit dem aus Beispiel 14 erhaltenen Amin überein.

Färbevorschrift I

2 Teile des gemäss Beispiel 5 erhaltenen Farbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75 % seines Gewichtes zunimmt, und dann getrocknet.

Danach imprägniert man das Gewebe mit einer 20 °C wärmen Lösung, die pro Liter 4 Gramm Natriumhydroxid und 300 Gramm Natriumchlorid enthält, quetscht auf 75 % Gewichtszunahme ab, dämpft die Färbung während 30 Sekunden bei 100 bis 120 °C, spült, seift während einer Viertelstunde in einer 0,3 %igen kochenden Lösung eines nichtionogenen Waschmittels, spült und trocknet.

Färbevorschrift II

2 Teile des gemäss Beispiel 5 erhaltenen Farbstoffes werden in 400 Teilen Wasser gelöst, dazu gibt

man 1 500 Teile einer Lösung, die pro Liter 53 g Natriumchlorid enthält. In dieses Färbebad geht man bei 40 °C mit 100 Teilen eines Baumwollgewebes ein. Nach 45 Minuten werden 100 Teile einer Lösung, die pro Liter 16 g Natriumhydroxid und 20 g kalziniertes Soda enthält, zugegeben. Die Temperatur des Färbebades wird weitere 45 Minuten bei 40 °C gehalten. Danach wird die gefärbte Ware gespült, während einer Viertelstunde mit einem nichtionogenen Waschmittel kochend geseift, nochmals gespült und getrocknet.

Färbevorschrift III

4 Teile des gemäss Beispiel 5 erhaltenen Farbstoffes werden in 50 Teilen Wasser gelöst. Dazu gibt man 50 Teile einer Lösung, die pro Liter 5 g Natriumhydroxid und 20 g kalziniertes Soda enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

Druckvorschrift

3 Teile des gemäss Beispiel 5 erhaltenen Farbstoffes werden unter schnellem Rühren in 100 Teile einer Stammverdickung, enthaltend 50 Teile 5 %ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102 °C in gesättigtem Dampf. Das bedruckte Gewebe wird dann gespült, gegebenenfalls kochend geseift und nochmals gespült, und anschliessend getrocknet.

**Patentansprüche**

1. Reaktivfarbstoffe der Formel

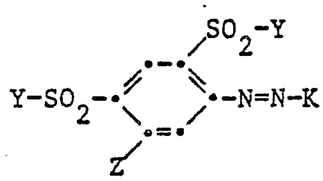

(1)

worin Y ein Rest $—CH=CH_2$ oder $—CH_2CH_2—X$, X eine Abgangsgruppe, Z Wasserstoff oder Halogen, und K der Rest einer bei einem pH-Wert $\leq 7$ kuppelnden Kupplungskomponente ist.

2. Reaktivfarbstoffe gemäss Anspruch 1, worin Y ein Rest $—CH_2CH_2—X$ und X Sulfato ist.

3. Reaktivfarbstoffe gemäss Anspruch 2, worin Z Wasserstoff oder Chlor ist.

4. Reaktivfarbstoffe gemäss einem der Ansprüche 1 bis 3, worin K der Rest einer Kupplungskomponente der Aminobenzolreihe oder der heterocyclischen Reihe ist.

5. Reaktivfarbstoffe gemäss Anspruch 4, worin K der Rest eines Mono-oder Dialkylaminobenzols ist, worin die Alkylgruppe(n) und der Benzolkern weiter-substituiert sein können.

6. Reaktivfarbstoffe gemäss Anspruch 5, worin K der Rest eines N-Mono-$C_{1-4}$-alkenyl- oder N,N-Di-$C_{1-4}$-alkenylaminobenzols oder eines N-Mono-$C_{1-4}$-alkyl- oder N,N-Di-$C_{1-4}$-alkylaminobenzols ist, worin die Alkylgruppe(n) durch Hydroxy, Sulfo, Sulfato, Cyano, Chlor, Phenyl, Sulfophenyl, Sulfatoäthylaminocarbonyl, N-$C_{14}$-Alkyl-N-sulfatoäthylaminocarbonyl oder N,N-Di-sulfatoäthylaminocarbonyl substituiert sein können, und worin der Benzolkern durch $C_{1-4}$-Alkanoylamino, $C_{1-4}$-Alkylsulfonylamino, Halogen-$C_{1-4}$-alkylsulfonylamino, Trifluormethyl, Halogen, Cyano, $C_{1-4}$-Alkylsulfonyl, N,N-Di-$C_{1-4}$-alkylaminosulfonyl, Phenylaminosulfonyl, Sulfatoäthylaminosulfonyl, N-$C_{1-4}$-Alkyl-N-sulfatoäthylamino-sulfonyl, N,N-Di-sulfatoäthylaminosulfonyl, Sulfo-$C_{1-4}$-alkylaminosulfonyl, Carbamoyl, $C_{1-4}$-Alkylaminocarbonyl, N,N-Di-$C_{1-4}$-alkylaminocarbonyl, N-$C_{1-4}$-Alkyl-N-sulfatoäthylaminocarbonyl oder N,N-Di-sulfatoäthylaminocarbonyl substituiert sein kann.

7. Reaktivfarbstoffe gemäss Anspruch 6, der Formel

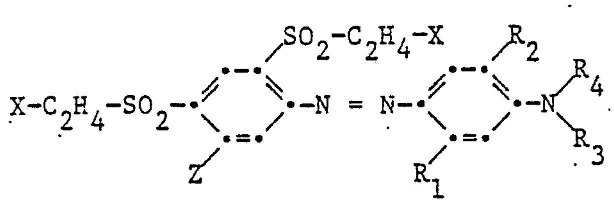

(2)

worin X Sulfato, Z Wasserstoff oder Chlor, $R_1$ Wasserstoff, Chlor, Acetylamino-Methylsulfonylamino, Chlormethylsulfonylamino, Trifluormethyl, Cyano, Methylsulfonyl, Aethylsulfonyl, n-Butylsulfonyl, N,N-Diäthylaminosulfonyl, N,N-Di-n-Butylaminosulfonyl, N,N-Di-sulfatoäthyl-aminocarbonyl, N-Methyl-N-sulfatoäthyl-aminocarbonyl, N-Methyl-N-sulfatoäthyl-aminosulfonyl, Sulfoäthylaminosulfonyl oder Phenylaminosulfonyl, $R_2$ Wasserstoff, Methoxy oder Chlor, $R_3$ Wasserstoff, β-Hydroxyäthyl, β-Sulfatoäthyl, β-Cyanäthyl, Aethyl, Benzyl, Sulfobenzyl oder Propenyl, und $R_4$ β-Hydroxyäthyl, β-Sulfatoäthyl, Aethyl, β-(β-Sulfatoäthylaminocarbonyl)-äthyl, β-(N-Methyl-N-β-sulfatoäthyl-aminocarbonyl)-äthyl, β-(N,N-Di-β-Sulfatoäthylaminocarbonyl)-äthyl, β-Sulfatopropyl, β,γ-Disulfatopropyl, Sulfoäthyl, Sulfopropyl, Sulfobenzyl, Sulfophenäthyl oder Propenyl ist.

8. Reaktivfarbstoffe gemäss Anspruch 4, worin K der Rest eines Aminobenzols ist, worin der Benzolkern durch N,N-Di-hydroxyäthylamino-chlortriazinylamino oder N,N-Di-sulfatoäthylamino-chlortriazinylamino und gegebenenfalls durch Sulfo substituiert ist, und worin die Aminogruppe mono- oder di-N,N-$C_{1-4}$-alkylsubstituiert sein kann.

9. Reaktivfarbstoffe gemäss Anspruch 8, der Formel

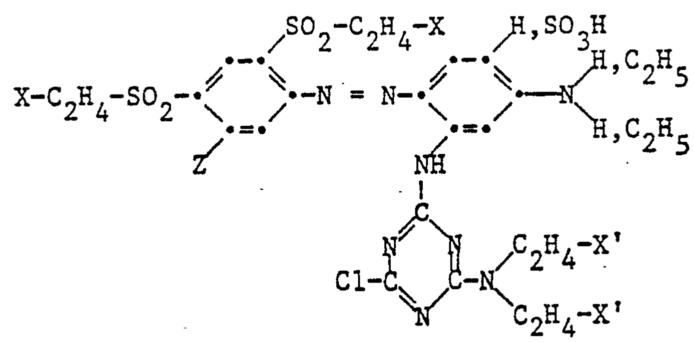

(3)

worin X Sulfato, Z Wasserstoff oder Chlor und X' Sulfato ist.

10. Reaktivfarbstoffe gemäss Anspruch 7, der Formel

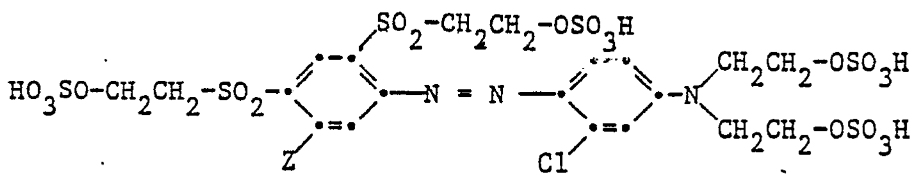

(4)

worin Z Wasserstoff oder Chlor ist.

11. Reaktivfarbstoffe gemäss Anspruch 7, der Formel

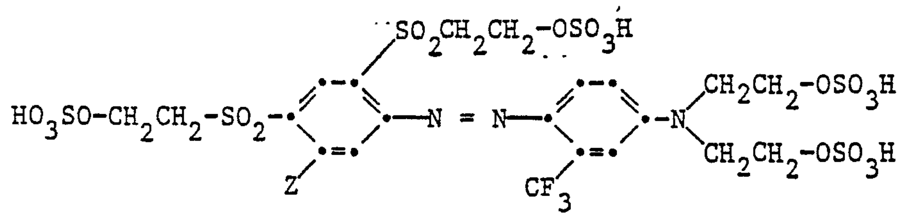

(5)

worin Z Wasserstoff oder Chlor ist.

12. Verfahren zur Herstellung von Reaktivfarbstoffen gemäss Anspruch 1, dadurch gekennzeichnet, dass man eine Diazokomponente der Formel

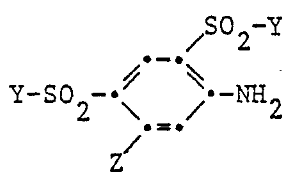

(6)

worin Y ein Rest $-CH=CH_2$ oder $-CH_2CH_2-X$, X eine Abgangsgruppe oder eine Vorstufe derselben ist, und Z die in Anspruch 1 angegebene Bedeutung hat, diazotiert und auf eine Kupplungskomponente der Formel

$$H-K \quad (7)$$

bei einem pH-Wert ≤ 7 kuppelt, und gegebenenfalls die gewünschte Abgangsgruppe einführt und/oder eine weitere Umwandlungsreaktion anschliesst.

13. Verbindungen der Formel

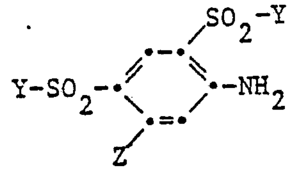

(6)

worin Y und Z die in Anspruch 12 angegebenen Bedeutungen haben.

14. Verbindung gemäss Anspruch 13, worin Y ein Rest $-CH_2CH_2-X$, X Hydroxy oder Sulfato, und Z Wasserstoff oder Chlor ist.

15. Verfahren zur Herstellung von Verbindungen gemäss Anspruch 13, dadurch gekennzeichnet, dass man Di- oder Trihalogen-nitrobenzole mit Mercaptoäthanol umsetzt, die erhaltenen Verbindungen zu den entsprechenden Sulfonylverbindungen oxydiert, die Nitrogruppe zur Aminogruppe reduziert und gegebenenfalls eine Abgangsgruppe einführt.

16. Verfahren zur Herstellung von Verbindungen gemäss Anspruch 13, dadurch gekennzeichnet, dass man ein Halogen-dinitrobenzol mit Mercaptoäthanol umsetzt, das entstandene Halogen-β-hydroxyäthylmercapto-nitrobenzol erneut mit Mercaptoäthanol umsetzt, das erhaltene Bis-(β-hydroxyäthylmercapto)-nitrobenzol zu der entsprechenden Bis-sulfonylverbindung oxydiert, die Nitrogruppe zur Aminogruppe reduziert und gegebenenfalls eine Abgangsgruppe einführt.

17. Verwendung der Reaktivfarbstoffe gemäss den Ansprüchen 1 bis 11, bzw. der gemäss Anspruch 12 erhältlichen Reaktivfarbstoffe zum Färben und Bedrucken.

18. Verwendung gemäss Anspruch 17, zum Färben und Bedrucken von cellulosehaltigem Fasermaterial.

**Claims**

1. Reactive dyes of the formula

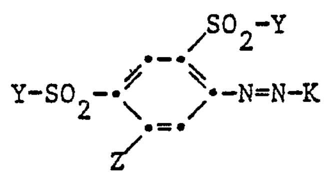

(1)

wherein Y is a $-CH=CH_2$ or $-CH_2CH_2-X$ radical, X is a leaving group, Z is hydrogen or halogen, and K is the radical of a coupling component which couples at pH ≤ 7.

2. Reactive dyes according to claim 1, wherein Y is a $-CH_2CH_2-X$ radical and X is sulfato.

3. Reactive dyes according to claim 2, wherein Z is hydrogen or chlorine.

4. Reactive dyes according to one of claims 1 to 3, wherein K is the radical of a coupling component of the aminobenzene or of the heterocyclic series.

5. Reactive dyes according to claim 4, wherein K is the radical of a mono- or dialkylaminobenzene, in which the alkyl moiety or moieties and the benzene nucleus may be further substituted.

6. Reactive dyes according to claim 5, wherein K is the radical of an N-mono-$C_1$-$C_4$-alkenylaminobenzene or N,N-di-$C_1$-$C_4$-alkenylaminobenzene or of an N-mono-$C_1$-$C_4$-alkylaminobenzene or N,N-di-$C_1$-$C_4$-alkylaminobenzene, wherein the alkyl moiety or moieties may be substituted by hydroxyl, sulfo, sulfato, cyano, chlorine, phenyl, sulfophenyl, sulfatoethylaminocarbonyl, N-$C_1$-$C_4$-alkyl-N-sulfatoethylaminocarbonyl or N,N-disulfatoethylaminocarbonyl, and wherein the benzene nucleus may be substituted by $C_1$-$C_4$-alkanoylamino, $C_1$-$C_4$-alkylsulfonylamino, halo-$C_1$-$C_4$-alkylsulfonylamino, trifluoromethyl, halogen, cyano, $C_1$-$C_4$-alkylsulfonyl, N,N-di-$C_1$-$C_4$-alkylaminosulfonyl, phenylaminosulfonyl, sulfatoethylaminosulfonyl, N-$C_1$-$C_4$-alkyl-N-sulfatoethylaminosulfonyl, N,N-di-sulfatoethylaminosulfonyl, sulfo-$C_1$-$C_4$-alkylaminosulfonyl, carbamoyl, $C_1$-$C_4$-alkylaminocarbonyl, N,N-di-$C_1$-$C_4$-alkylaminocarbonyl, N-$C_1$-$C_4$-alkyl-N-sulfatoethylaminocarbonyl or N,N-disulfatoethylaminocarbonyl.

7. Reactive dyes according to claim 6, of the formula

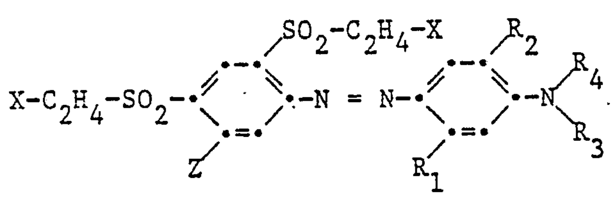

(2)

wherein X is sulfato, Z is hydrogen or chlorine, $R_1$ is hydrogen, chlorine, acetylamino-methylsulfonylamino (sic), chloromethylsulfonylamino, trifluoromethyl, cyano, methylsulfonyl, ethylsulfonyl, n-butylsulfonyl, N,N-diethylaminosulfonyl, N,N-di-n-butylaminosulfonyl, N,N-disulfatoethylaminocarbonyl, N-methyl-N-sulfatoethylaminocarbonyl, N-methyl-N-sulfatoethylaminosulfonyl, sulfoethylaminosulfonyl or phenylaminosulfonyl, $R_2$ is hydrogen, methoxy or chlorine, $R_3$ is hydrogen, β-hydroxyethyl, β-sulfatoethyl, β-cyanoethyl, ethyl, benzyl, sulfobenzyl or propenyl, and $R_4$ is β-hydroxyethyl, β-sulfatoethyl, ethyl, β-(β-sulfatoethylaminocarbonyl)-ethyl, β-(N-methyl-N-β-sulfatoethylaminocarbonyl)-ethyl, β-(N,N-di-β-sulfatoethylaminocarbonyl)-ethyl, β-sulfatopropyl, β,γ-disulfatopropyl, sulfoethyl, sulfopropyl, sulfobenzyl, sulfophenethyl or propenyl.

8. Reactive dyes according to claim 4, wherein K is the radical of an aminobenzene in which the benzene nucleus is substituted by N,N-di-hydroxyethylaminochlorotriazinylamino or N,N-di-sulfatoethylaminochlorotriazinylamino and optionally by sulfo, and wherein the amino group may be mono-$C_1$-$C_4$-alkyl- or di-N,N-$C_1$-$C_4$-alkyl-substituted.

9. Reactive dyes according to claim 8, of the formula

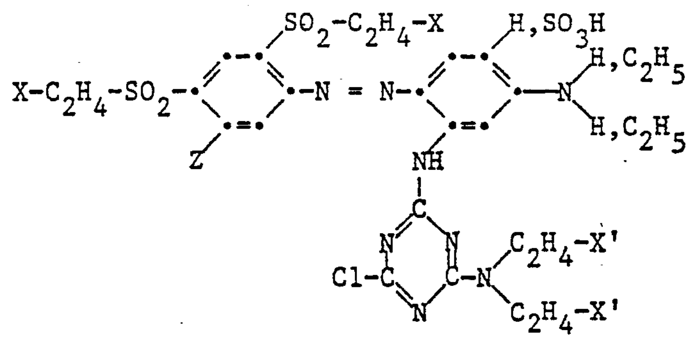

(3)

wherein X is sulfato, Z is hydrogen or chlorine and X' is sulfato.

10. Reactive dyes according to claim 7, of the formula

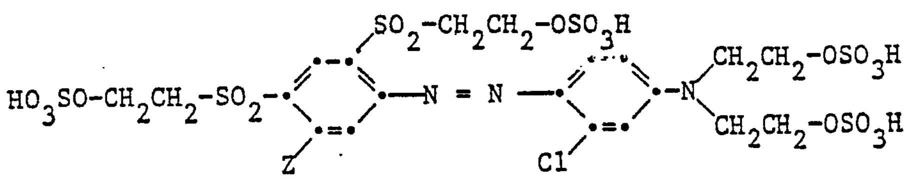

(4)

wherein Z is hydrogen or chlorine.

11. Reactive dyes according to claim 7, of the formula

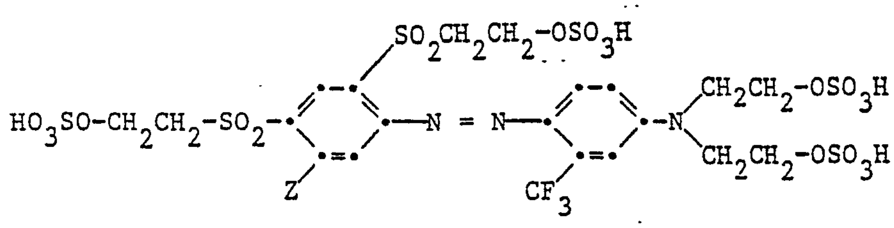

(5)

wherein Z is hydrogen or chlorine.

12. Process for the preparation of reactive dyes according to claim 1, which comprises diazotising a diazo component of the formula

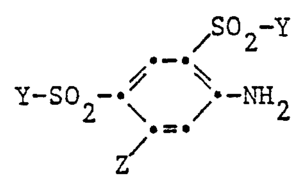

(6)

wherein Y is a $-CH=CH_2$ or $-CH_2CH_2-X$ radical, X is a leaving group or a precursor thereof, and Z is as defined in claim 1, and coupling it to a coupling component of the formula

H—K (7),

at a pH value ≤ 7, and optionally introducing the desired leaving group and/or subsequently carrying out a further conversion reaction.

13. Compounds of the formula

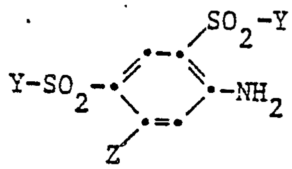

(6)

wherein Y and Z are defined as in claim 12.

14. Compound according to claim 13, wherein Y is a $—CH_2CH_2—X$ radical, X is hydroxyl or sulfato and Z is hydrogen or chlorine.

15. Process for the preparation of compounds according to claim 13, which comprises reacting di- or trihalonitrobenzenes with mercaptoethanol, oxidising the compounds so obtained to the corresponding sulfonyl compounds, reducing the nitro group to the amino group and, optionally introducing a leaving group.

16. Process for the preparation of compounds according to claim 13, which comprises reacting a halodinitrobenzene with mercaptoethanol, again reacting the resultant halo-β-hydroxyethylmercaptonitrobenzene with mercaptoethanol, oxidising the bis(β-hydroxyethylmercapto)-nitrobenzene obtained to the corresponding bis-sulfonyl compound, reducing the nitro group to the amino group and, optionally, introducing a leaving group.

17. Use of reactive dyes according to claims 1 to 11 or of reactive dyes obtainable according to claim 12 for dyeing and printing.

18. Use according to claim 17 for dyeing and printing cellulosic fibre material.

**Revendications**

1. Colorants réactifs de formule

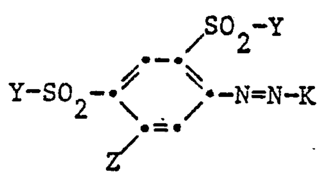

(1)

dans laquelle Y représente un groupe $—CH{=}CH_2$ ou $—CH_2CH_2—X$, X étant un groupe séparable, Z représente un atome d'hydrogène ou d'halogène, et K représente le reste d'un composant de copulation copulant à pH ≤ 7.

2. Colorants réactifs conformes à la revendication 1, dans lesquels Y est un groupe $—CH_2CH_2—X$, X étant un groupe sulfato.

3. Colorants réactifs conformes à la revendication 2, dans lesquels Z représente un atome d'hydrogène ou de chlore.

4. Colorants réactifs conformes à l'une des revendications 1 à 3, dans lesquels K est le reste d'un composant de copulation de la série de l'aminobenzène ou de la série hétérocyclique.

5. Colorants réactifs conformes à la revendication 4, dans lesquels K est le reste d'un monoalkylaminobenzène ou d'un dialkylaminobenzène, le ou les groupes alkyle et le noyau benzénique pouvant être substitués davantage.

6. Colorants réactifs conformes à la revendication 5, dans lesquels K est le reste d'un N-mono-(alcényl en $C_{1-4}$)-aminobenzène ou d'un N,N-di-(alcényl en $C_{1-4}$)-aminobenzène, ou bien d'un N-mono-(alkyl en $C_{1-4}$)-aminobenzène ou d'un N,N-di-(alkyl en $C_{1-4}$)-aminobenzène, le ou les groupes alkyle pouvant être substitués par un ou des atomes de chlore ou par un ou des groupes hydroxyle, sulfo, sulfato, cyano, phényle, sulfophényle, sulfatoéthylaminocarbonyle, N-(alkyl en $C_{1-4}$)-N-sulfatoéthylaminocarbonyle, ou N,N-di-sulfatoéthylaminocarbonyle, et le noyau benzénique pouvant être substitué par un ou des atomes d'halogène ou par un ou des groupes alcanoylamino en $C_{1-4}$, alkylsulfonylamino en $C_{1-4}$, halogénoalkylsulfonylamino en $C_{1-4}$, trifluorométhyle, cyano, alkylsulfonyle en $C_{1-4}$, N,N-di-(alkyl en $C_{1-4}$)-aminosulfonyle, phénylaminosulfonyle, sulfatoéthylaminosulfonyle, N-(alkyl en $C_{1-4}$)-N-sulfatoéthylaminosulfonyle, N,N-di-sulfatoéthylaminosulfonyle, sulfoalkylaminosulfonyle en $C_{1-4}$, carbamoyle, (alkyl en $C_{1-4}$)-aminocarbonyle, N,N-di-(alkyl en $C_{1-4}$)-aminocarbonyle, N-(alkyl en $C_{1-4}$)-N-sulfatoéthylaminocarbonyle ou N,N-disulfatoéthylaminocarbonyle.

7. Colorants réactifs conformes à la revendication 6, de formule

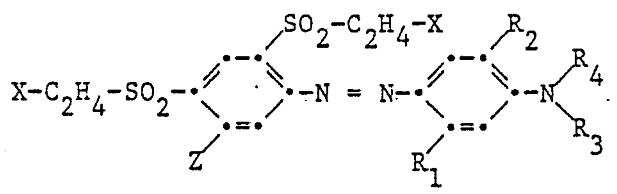 (2)

dans laquelle X représente un groupe sulfato, Z représente un atome d'hydrogène ou de chlore, $R_1$ représente un atome d'hydrogène ou de chlore ou un groupe acétylamino-méthylsulfonylamino, chlorométhylsulfonylamino, trifluorométhyle, cyano, méthylsulfonyle, éthylsulfonyle, n-butylsulfonyle, N,N-diéthylaminosulfonyle, N,N-di-n-butylaminosulfonyle, N,N-disulfatoéthyl-aminocarbonyle, N-méthyl-N-sulfatoéthyl-aminocarbonyle, N-méthyl-N-sulfatoéthyl-aminosulfonyle, sulfoéthylaminosulfonyle ou phénylaminosulfonyle, $R_2$ représente un atome d'hydrogène ou de chlore ou un groupe méthoxy, $R_3$ représente un atome d'hydrogène ou un groupe β-hydroxyéthyle, β-sulfatoéthyle, β-cyanoéthyle, éthyle, benzyle, sulfobenzyle, ou propényle, et $R_4$ représente un groupe β-hydroxyéthyle, β-sulfatoéthyle, éthyle, β-(β-sulfatoéthylaminocarbonyl)-éthyle, β-(N-méthyl-N-β-sulfatoéthyl-aminocarbonyl)-éthyle, β-(N,N-di-β-sulfatoéthylaminocarbonyl)-éthyle, β-sulfatopropyle, β,γ-disulfatopropyle, sulfoéthyle, sulfopropyle, sulfobenzyle, sulfophénéthyle ou propényle.

8. Colorants réactifs conformes à la revendication 4, dans lesquels K représente le reste d'un aminobenzène dans lequel le noyau benzénique est substitué par un groupe N,N-di-hydroxyéthylamino-chlorotriazinylamino ou N,N-di-sulfatoéthylamino-chlorotriazinylamino, et éventuellement par un ou des groupes sulfo, et dans lequel le groupe amino peut avoir l'atome d'azote substitué par un ou deux groupes alkyle en $C_{1-4}$.

9. Colorants réactifs conformes à la revendication 8, de formule

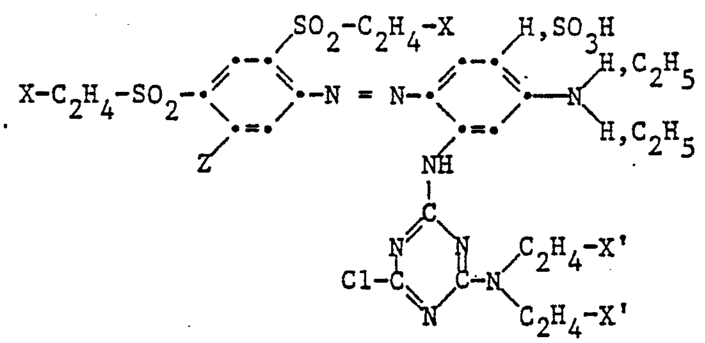 (3)

dans laquelle X représente un groupe sulfato, Z représente un atome d'hydrogène ou de chlore et X' représente un groupe sulfato.

10. Colorants réactifs conformes à la revendication 7, de formule

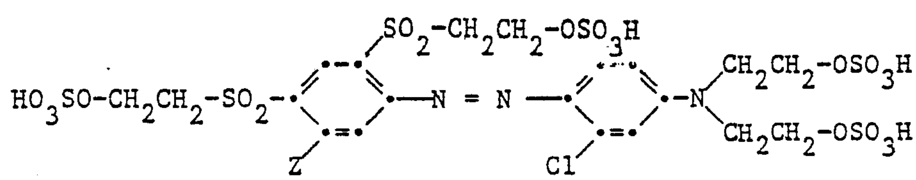 (4)

dans laquelle Z représente un atome d'hydrogène ou de chlore.

11. Colorants réactifs conformes à la revendication 7, de formule

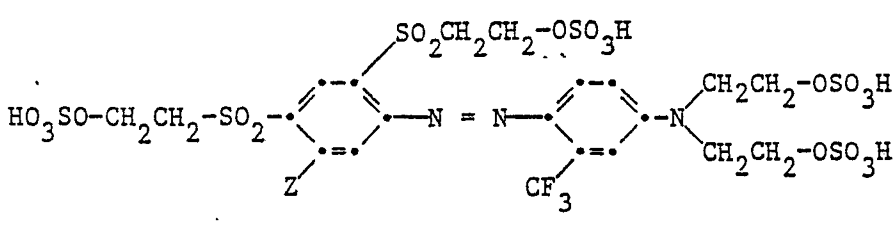 (5)

dans laquelle Z représente un atome d'hydrogène ou de chlore.

12. Procédé de préparation des colorants réactifs conformes à la revendication 1, caractérisé en ce que l'on diazote un composant diazo de formule

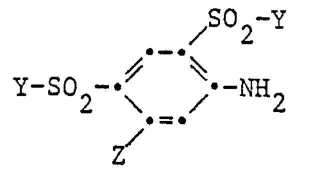 (6)

dans laquelle Y représente un groupe $—CH{=}CH_2$ ou $—CH_2CH_2—X$, X étant un groupe séparable ou un précurseur d'un tel groupe, et Z a la signification indiquée dans la formule 1, et on le fait copuler sur un composant de copulation de formule

H—K (7)

à un pH $\leqslant 7$, et éventuellement, on introduit le groupe séparable désiré et/ou on effectue à la suite une autre réaction de conversion.

13. Composés de formule

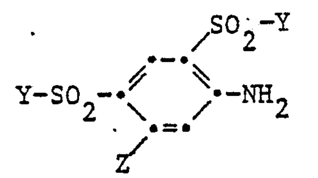 (6)

dans laquelle Y et Z ont les significations indiquées dans la revendication 12.

14. Composés conformes à la revendication 13, dans lesquels Y représente un groupe $—CH_2CH_2—X$, X étant un groupe hydroxyle ou sulfato, et Z représente un atome d'hydrogène ou de chlore.

15. Procédé de préparation de composés conformes à la revendication 13, caractérisé en ce que l'on fait réagir les di- ou trihalogénonitrobenzènes avec du mercaptoéthanol, on oxyde les composés obtenus en les composés sulfonyles correspondants, on réduit le groupe nitro en groupe amino, et éventuellement, on introduit un groupe séparable.

16. Procédé de préparation de composés conformes à la revendication 13, caractérisé en ce que l'on fait réagir un halogénodinitrobenzène avec du mercaptoéthanol, on fait réagir à nouveau avec du mercaptoéthanol l'halogéno-β-hydroxyéthylmercapto-nitrobenzène formé, on oxyde le bis-(β-hydroxyéthylmercapto)-nitrobenzène obtenu en le composé bis-sulfonyle correspondant, on réduit le groupe nitro en groupe amino, et on introduit éventuellement un groupe séparable.

17. Utilisation des colorants réactifs conformes aux revendications 1 à 11, ou des colorants réactifs obtenus conformément à la revendication 12, pour la teinture et l'impression.

18. Utilisation conforme à la revendication 17, pour la teinture et l'impression de matériaux fibreux contenant de la cellulose.